(19) Europäisches Patentamt / European Patent Office / Office européen des brevets

(11) **EP 4 105 597 A1**

(12) **EUROPEAN PATENT APPLICATION**
published in accordance with Art. 153(4) EPC

(43) Date of publication:
**21.12.2022 Bulletin 2022/51**

(21) Application number: **21752971.8**

(22) Date of filing: **02.02.2021**

(51) International Patent Classification (IPC):
**G01C 3/06** (2006.01)    **G01S 7/497** (2006.01)

(52) Cooperative Patent Classification (CPC):
**G01C 3/06; G01S 7/497**

(86) International application number:
**PCT/JP2021/003779**

(87) International publication number:
**WO 2021/161857 (19.08.2021 Gazette 2021/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.02.2020 JP 2020023007**

(71) Applicant: **Sony Semiconductor Solutions
Corporation
Atsugi-shi Kanagawa 243-0014 (JP)**

(72) Inventors:
• **KADO, Takahiro
Atsugi-shi, Kanagawa 243-0014 (JP)**
• **SUZUKI, Shunpei
Atsugi-shi, Kanagawa 243-0014 (JP)**

(74) Representative: **Witte, Weller & Partner
Patentanwälte mbB
Postfach 10 54 62
70047 Stuttgart (DE)**

(54) **DISTANCE MEASUREMENT DEVICE AND DISTANCE MEASUREMENT METHOD**

(57)    A distance measuring device (1) includes a light emitting unit (13), a light receiving unit (14), and a control unit (11). In the light receiving unit (14), a plurality of light receiving elements (20) that receives reflected light (L2), which is light (L1) of the light emitting unit (13) that has been reflected, is two-dimensionally arranged. The control unit (11) performs control to read the detection signal of each of a predetermined number of light receiving elements among the plurality of light receiving elements and measure distance. The control unit (11) detects abnormality of the light emitting unit (13) on the basis of a calculated value calculated on a basis of detection signals of a predetermined number of light receiving elements.

*FIG. 1*

## Description

TECHNICAL FIELD

The present disclosure relates to a distance measuring device and a distance measuring method.

BACKGROUND ART

Conventionally, there has been a distance measuring device, such as light detection and ranging (LiDAR), that measures the distance to an object that is a reflector by emitting laser light to the outside and receiving reflected light. In this type of distance measuring device, there is a technology of branching the optical path of a light emitting unit, causing a part of the light to be incident on a dedicated photodetector or the like, and monitoring whether the light is correctly projected (see Patent Document 1, for example).

CITATION LIST

PATENT DOCUMENT

Patent Document 1: Japanese Patent Application Laid-Open No. 2017-224594

SUMMARY OF THE INVENTION

PROBLEMS TO BE SOLVED BY THE INVENTION

However, with the conventional technology, it is difficult to cope with various failure factors of the light emitting unit, and since it is necessary to add dedicated components, there have been problems of an increase in cost and a decrease in efficiency of the device.

In view of the foregoing, the present disclosure proposes a distance measuring device and a distance measuring method capable of detecting abnormality with high accuracy at low cost.

SOLUTIONS TO PROBLEMS

In order to solve the above problem, a distance measuring device according to an aspect of the present disclosure includes a light emitting unit, a light receiving unit, and a control unit. In the light receiving unit, a plurality of light receiving elements that receives reflected light, which is light of the light emitting unit that has been reflected, is two-dimensionally arranged. The control unit performs control to read a detection signal of each of a predetermined number of the light receiving elements among the plurality of light receiving elements and measure a distance. The control unit detects abnormality of the light emitting unit, on the basis of a calculated value calculated on the basis of the detection signals of the predetermined number of the light receiving elements.

BRIEF DESCRIPTION OF DRAWINGS

Fig. 1 is a block diagram illustrating a schematic configuration example of a ToF sensor as a distance measuring device according to the present embodiment.
Fig. 2 is a diagram for explaining an optical system of the ToF sensor according to the present embodiment.
Fig. 3 is a block diagram illustrating a schematic configuration example of a light receiving unit according to the present embodiment.
Fig. 4 is a schematic diagram illustrating a schematic configuration example of a SPAD array according to the present embodiment.
Fig. 5 is a circuit diagram illustrating a schematic configuration example of a SPAD pixel according to the present embodiment.
Fig. 6 is a block diagram illustrating a more detailed configuration example of a SPAD addition unit according to the present embodiment.
Fig. 7 is a diagram illustrating scanning timings of a light emitting unit and the light receiving unit.
Fig. 8 is a diagram illustrating scanning timings of a light emitting unit and a light receiving unit according to a modification.
Fig. 9 is a diagram illustrating scanning timings of a light emitting unit and a light receiving unit according to a modification.
Fig. 10A is a diagram illustrating scanning timings of a light emitting unit and a light receiving unit according to a modification.
Fig. 10B is a diagram illustrating scanning timings of a light emitting unit and a light receiving unit according to a modification.
Fig. 11 is a diagram for describing an abnormality detection method of the light emitting unit.
Fig. 12 is a diagram for describing an abnormality detection method of the light emitting unit.
Fig. 13 is a diagram illustrating discrimination processing between reflected light and ambient light.
Fig. 14 is a diagram illustrating discrimination processing between reflected light and ambient light.
Fig. 15 is a diagram illustrating a scanning direction of a light emitting unit according to a modification.
Fig. 16 is a diagram illustrating a scanning direction of a light receiving unit according to the modification.
Fig. 17 is a flowchart illustrating a processing procedure of entire processing executed by the ToF sensor.
Fig. 18 is a flowchart illustrating a processing procedure of abnormality detection processing executed by the ToF sensor.
Fig. 19 is a flowchart illustrating a processing procedure of detection processing executed by the ToF sensor.

Fig. 20 is a block diagram illustrating a schematic configuration example of a vehicle control system which is an example of a moving body control system to which the technology according to the present disclosure can be applied.

Fig. 21 is a diagram illustrating an example of installation positions of an imaging part and an outside information detector.

## MODE FOR CARRYING OUT THE INVENTION

Hereinafter, embodiments of the present disclosure will be described in detail with reference to the drawings. Note that in each of the following embodiments, the same parts will be designated by the same reference numerals, thereby omitting duplicate description.

Furthermore, in the present specification and the drawings, a plurality of components having substantially the same functional configuration is sometimes distinguished by assigning different numbers after the same reference sign. Note, however, that, in a case where it is not necessary to distinguish each of a plurality of components having substantially the same functional configuration, only the same reference numeral will be assigned.

Note that the description will be given in the following order.

1. Embodiment
1.1 Distance measuring device (ToF sensor)
1.2 Optical system
1.3 Light receiving unit
1.4 SPAD array
1.5 SPAD pixel
1.6 Schematic operation example of SPAD pixel
1.7 SPAD addition unit
1.8 Sampling period
1.9 Scanning timing of light emitting unit and light receiving unit
1.10 Abnormality detection in light emitting unit
1.11 Discrimination between reflected light and ambient light
2. Application example
3. Summary

1. Embodiment

First, an embodiment will be described in detail below with reference to the drawings.

1.1 Distance measuring device (ToF sensor)

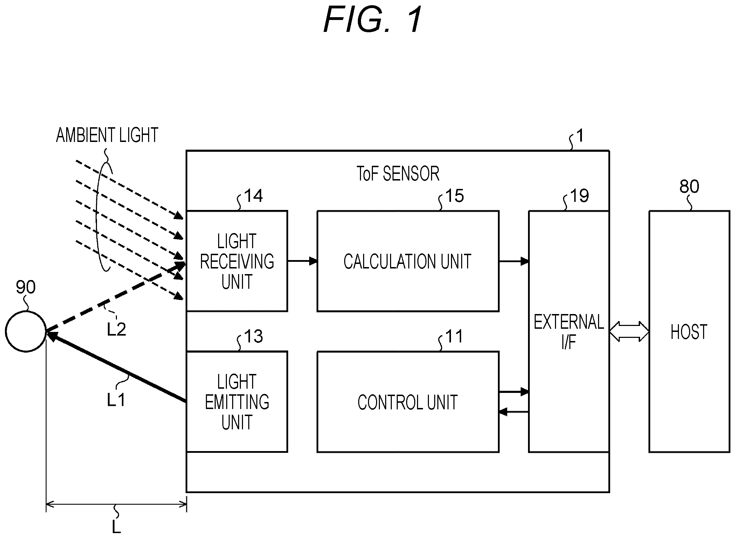

Fig. 1 is a block diagram illustrating a schematic configuration example of a ToF sensor as a distance measuring device according to the present embodiment. As illustrated in Fig. 1, A ToF sensor 1 includes a control unit 11, a light emitting unit 13, a light receiving unit 14, a calculation unit 15, and an external interface (I/F) 19.

The control unit 11 includes, for example, an information processing device such as a central processing unit (CPU) and controls each unit of the ToF sensor 1.

The external I/F 19 may be, for example, a communication adapter for establishing communication with an external host 80 via a communication network conforming to any standard such as a controller area network (CAN), a local interconnect network (LIN), or FlexRay (registered trademark), in addition to a wireless local area network (LAN) or a wired LAN.

Here, for example, in a case where the ToF sensor 1 is mounted on an automobile or the like, the host 80 may be an engine control unit (ECU) mounted on the automobile or the like. Furthermore, in a case where the ToF sensor 1 is mounted on an autonomous mobile robot such as a domestic pet robot or an autonomous mobile body such as a robot cleaner, an unmanned aerial vehicle, or a following transport robot, the host 80 may be a control device or the like that controls the autonomous mobile body.

The light emitting unit 13 includes, for example, one or a plurality of semiconductor laser diodes as a light source, and emits a pulsed laser light L1 having a predetermined time width at a predetermined cycle (also referred to as light emission period). Furthermore, the light emitting unit 13 emits the laser light L1 having a time width of 1 ns (nanosecond) at a cycle of 1 MHz (megahertz), for example. For example, in a case where an object 90 is present within a distance measurement range, the laser light L1 emitted from the light emitting unit 13 is reflected by the object 90 and is incident on the light receiving unit 14 as reflected light L2.

Although details will be described later, the light receiving unit 14 includes, for example, a plurality of SPAD pixels arranged in a two-dimensional lattice pattern, and outputs information (corresponding to number of detection signals described later, for example) regarding the number of SPAD pixels (hereinafter referred to as detection number) in which incidence of a photon has been detected after light emission by the light emitting unit 13. For example, the light receiving unit 14 detects incidence of photons in a predetermined sampling period for one light emission of the light emitting unit 13 and outputs the detection number.

The calculation unit 15 aggregates the detection number output from the light receiving unit 14 for each of the plurality of SPAD pixels (corresponding to one or a plurality of macropixels described later, for example). On the basis of the pixel value obtained by the aggregation, the calculation unit 15 creates a histogram in which the horizontal axis is the flight time and the vertical axis is the cumulative pixel value. For example, the calculation unit 15 repeatedly executes, for a plurality of times of light emission of the light emitting unit 13, obtaining a pixel value by aggregating the detection number at a predetermined sampling frequency for one light emission of the light emitting unit 13. As a result, the calculation unit 15 creates a histogram in which the horizontal axis (bin of histogram) is a sampling period corresponding to the flight time and the vertical axis is a cumulative pixel value obtained by accumulating pixel values obtained in each sampling period.

Furthermore, after performing predetermined filter processing on the created histogram, the calculation unit 15 identifies the flight time when the cumulative pixel value reaches the peak in the histogram after the filter processing. Then, the calculation unit 15 calculates the distance from the ToF sensor 1 or the device equipped with the ToF sensor 1 to the object 90 present within the distance measurement range on the basis of the identified flight time. Note that the information on the distance calculated by the calculation unit 15 may be output to the host 80 or the like via the external I/F 19, for example.

1.2 Optical system

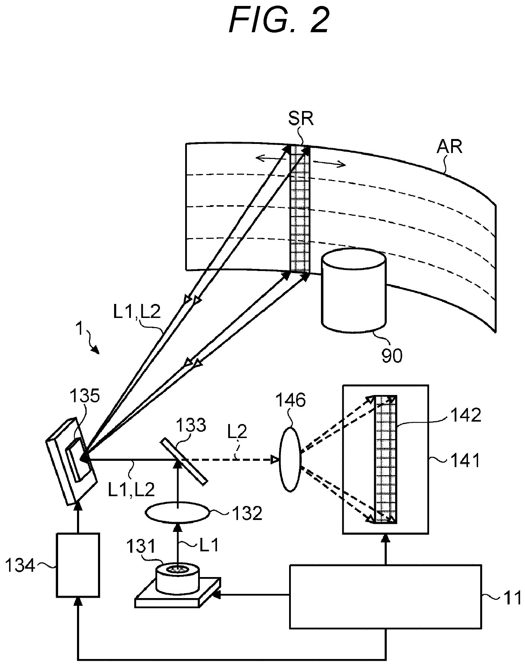

Fig. 2 is a diagram for describing an optical system of the ToF sensor according to the present embodiment. Note that while Fig. 2 exemplifies a so-called scanning type optical system in which the angle of view of the light receiving unit 14 is scanned in the horizontal direction, the present invention is not limited thereto. For example, a so-called flash type ToF sensor in which the angle of view of the light receiving unit 14 is fixed may be used.

As illustrated in Fig. 2, the ToF sensor 1 includes a light source 131, a collimator lens 132, a half mirror 133, a galvano mirror 135, a light receiving lens 146, and a SPAD array 141 as an optical system. The light source 131, the collimator lens 132, the half mirror 133, and the galvano mirror 135 are included in the light emitting unit 13 of Fig. 1, for example. Furthermore, the light receiving lens 146 and the SPAD array 141 are included in the light receiving unit 14 of Fig. 1, for example.

In the configuration illustrated in Fig. 2, the laser light L1 emitted from the light source 131 is converted into rectangular parallel light in which the intensity spectrum of the cross section is long in the vertical direction by the collimator lens 132, and then is incident on the half mirror 133. The half mirror 133 reflects a part of the incident laser light L1. The laser light L1 reflected by the half mirror 133 is incident on the galvano mirror 135. For example, the galvano mirror 135 is vibrated in the horizontal direction about a predetermined rotation axis by a drive unit 134 that operates on the basis of control by the control unit 11. As a result, the laser light L1 is horizontally scanned such that an angle of view SR of the laser light L1 reflected by the galvano mirror 135 reciprocates in the horizontal direction in a distance measurement range AR. Note that a micro electro mechanical system (MEMS), a micromotor, or the like can be used for the drive unit 134.

The laser light L1 reflected by the galvano mirror 135 is reflected by the object 90 existing in the distance measurement range AR and is incident on the galvano mirror 135 as the reflected light L2. A part of the reflected light L2 incident on the galvano mirror 135 is transmitted through the half mirror 133 and is incident on the light receiving lens 146, thereby forming an image on a specific SPAD array 142 in the SPAD array 141. Note that the SPAD array 142 may be the entire SPAD array 141 or a part thereof.

1.3 Light receiving unit

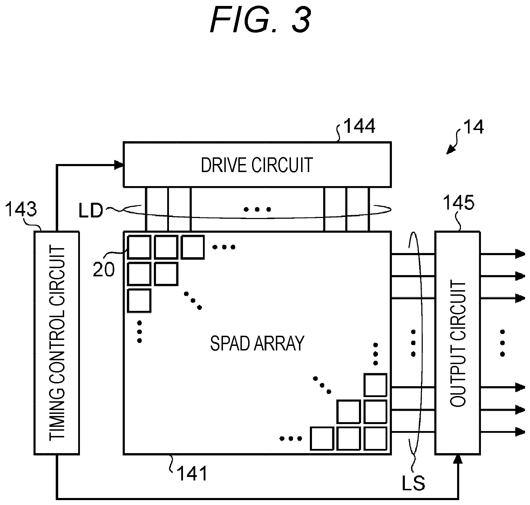

Fig. 3 is a block diagram illustrating a schematic configuration example of a light receiving unit according to the present embodiment. As illustrated in Fig. 3, the light receiving unit 14 includes the SPAD array 141, a timing control circuit 143, a drive circuit 144, and an output circuit 145.

The SPAD array 141 includes a plurality of SPAD pixels 20 arranged in a two-dimensional lattice pattern. To the plurality of SPAD pixels 20, a pixel drive line LD (vertical direction in Fig. 3) is connected for each column, and an output signal line LS (horizontal direction in Fig. 3) is connected for each row. One end of the pixel drive line LD is connected to an output end corresponding to each column of the drive circuit 144, and one end of the output signal line LS is connected to an input end corresponding to each row of the output circuit 145.

In the present embodiment, the reflected light L2 is detected using all or a part of the SPAD array 141. The region (SPAD array 142) used in the SPAD array 141 may be a vertically long rectangle that is the same as the image of the reflected light L2 formed on the SPAD array 141 in a case where the entire laser light L1 is reflected as the reflected light L2. Note, however, that the present invention is not limited thereto, and various modifications such as a region larger or smaller than the image of the reflected light L2 formed on the SPAD array 141 may be made.

The drive circuit 144 includes a shift register, an address decoder, and the like, and drives each SPAD pixel 20 of the SPAD array 141 at the same time for all pixels, in units of columns, or the like. Therefore, the drive circuit 144 includes at least a circuit that applies a quench voltage V_QCH to be described later to each SPAD pixel 20 in the selected column in the SPAD array 141, and a circuit that applies a selection control voltage V_SEL to be described later to each SPAD pixel 20 in the selected column. Then, the drive circuit 144 applies the selection control voltage V_SEL to the pixel drive line LD corresponding to the column to be read, thereby selecting the SPAD pixels 20 to be used for detecting incidence of photons in units of columns.

A signal (referred to as detection signal) V_OUT output from each SPAD pixel 20 of the column selectively scanned by the drive circuit 144 is input to the output circuit 145 through each of the output signal lines LS. The output circuit 145 outputs the detection signal V_OUT input from each SPAD pixel 20 to a SPAD addition unit 40 provided for each macropixel described later.

The timing control circuit 143 includes a timing generator or the like that generates various timing signals, and controls the drive circuit 144 and the output circuit 145 on the basis of the various timing signals generated by the timing generator.

1.4 SPAD array

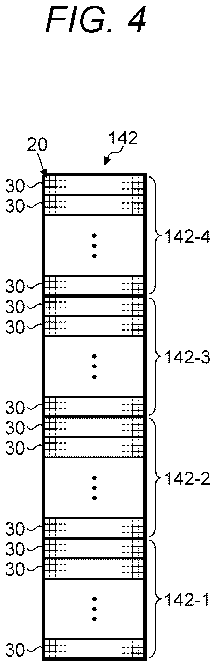

Fig. 4 is a schematic diagram illustrating a schematic configuration example of the SPAD array according to the present embodiment. As illustrated in Fig. 4, the SPAD array 142 includes, for example, a configuration in which a plurality of SPAD pixels 20 is arranged in a two-dimensional lattice pattern. The plurality of SPAD pixels 20 is grouped into a plurality of macropixels 30 including a predetermined number each of SPAD pixels 20 arranged in the row and/or column direction. The shape of the region connecting the outer edges of the SPAD pixels 20 located at the outermost periphery of the macropixels 30 is a predetermined shape (e.g., rectangle).

The SPAD array 142 includes, for example, a plurality of macropixels 30 arranged in the vertical direction (corresponding to column direction). In the present embodiment, the SPAD array 142 is divided into a plurality of regions (hereinafter referred to as SPAD region) in the vertical direction, for example. In the example illustrated in Fig. 4, the SPAD array 142 is divided into four SPAD regions 142-1 to 142-4. The SPAD region 142-1 positioned at the bottom corresponds to, for example, the 1/4 region at the bottom in the angle of view SR of the SPAD array 142, the SPAD region 142-2 thereabove corresponds to, for example, the second 1/4 region from the bottom in the angle of view SR, the SPAD region 142-3 thereabove corresponds to, for example, the third 1/4 region from the bottom in the angle of view SR, and the uppermost SPAD region 142-4 corresponds to, for example, the uppermost 1/4 region in the angle of view SR.

1.5 SPAD pixel

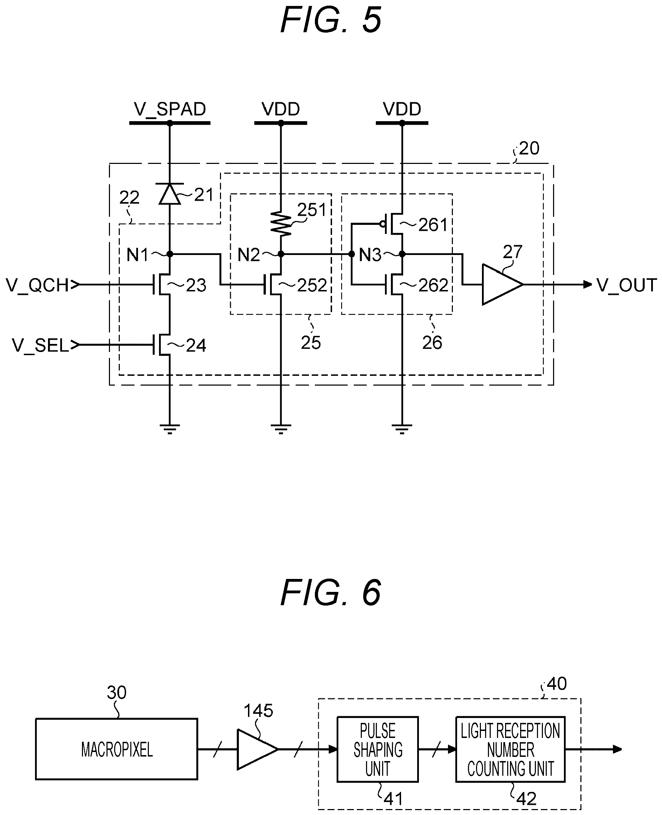

Fig. 5 is a circuit diagram illustrating a schematic configuration example of a SPAD pixel according to the present embodiment. As illustrated in Fig. 5, the SPAD pixel 20 includes a photodiode 21 as a light receiving element and a readout circuit 22 that detects incidence of a photon on the photodiode 21. When a photon is incident on the photodiode 21 in a state where a reverse bias voltage V_SPAD equal to or higher than a breakdown voltage is applied between an anode and a cathode of the photodiode 21, the photodiode 21 generates an avalanche current.

The readout circuit 22 includes a quench resistor 23, a digital converter 25, an inverter 26, a buffer 27, and a selection transistor 24. The quench resistor 23 includes, for example, an N-type metal oxide semiconductor field effect transistor (MOSFET, hereinafter referred to as NMOS transistor). The drain of the NMOS transistor is connected to the anode of the photodiode 21, and the source of the NMOS transistor is grounded via the selection transistor 24. Furthermore, the quench voltage V_QCH set in advance for causing the NMOS transistor to act as a quench resistor is applied to the gate of the NMOS transistor included in the quench resistor 23 from the drive circuit 144 via the pixel drive line LD.

In the present embodiment, the photodiode 21 is a SPAD. The SPAD is an avalanche photodiode that operates in Geiger mode when a reverse bias voltage equal to or higher than a breakdown voltage is applied between the anode and the cathode of the SPAD, and can detect incidence of one photon.

The digital converter 25 includes a resistor 251 and an NMOS transistor 252. The drain of the NMOS transistor 252 is connected to a power supply voltage VDD via the resistor 251, and the source of the NMOS transistor 252 is grounded. Furthermore, a voltage at a connection point N1 between the anode of the photodiode 21 and the quench resistor 23 is applied to the gate of the NMOS transistor 252.

The inverter 26 includes a P-type MOSFET (hereinafter referred to as PMOS transistor) 261 and an NMOS transistor 262. The drain of the PMOS transistor 261 is connected to the power supply voltage VDD, and the source of the PMOS transistor 261 is connected to the drain of the NMOS transistor 262. The drain of the NMOS transistor 262 is connected to the source of the PMOS transistor 261, and the source of the NMOS transistor 262 is grounded. A voltage at a connection point N2 between the resistor 251 and the drain of the NMOS transistor 252 is applied to each of the gate of the PMOS transistor 261 and the gate of the NMOS transistor 262. The output of the inverter 26 is input to the buffer 27.

The buffer 27 is a circuit for impedance conversion. When an output signal is input from the inverter 26, the buffer 27 performs impedance conversion on the input output signal and outputs the converted signal as the detection signal V_OUT.

The selection transistor 24 is, for example, an NMOS transistor. The drain of the selection transistor 24 is connected to the source of the NMOS transistor included in the quench resistor 23, and the source of the selection transistor 24 is grounded. The selection transistor 24 is connected to the drive circuit 144, and changes from OFF to ON when the selection control voltage V_SEL from the drive circuit 144 is applied to the gate of the selection transistor 24 via the pixel drive line LD.

1.6 Schematic operation example of SPAD pixel

The readout circuit 22 exemplified in Fig. 5 operates as follows, for example. That is, first, during a period in which the selection control voltage V_SEL is applied to the selection transistor 24 from the drive circuit 144 and the selection transistor 24 is ON, the reverse bias voltage V_SPAD equal to or higher than the breakdown voltage is applied to the photodiode 21. As a result, the operation of the photodiode 21 is permitted.

On the other hand, during a period in which the selection control voltage V_SEL is not applied to the selection transistor 24 from the drive circuit 144 and the selection transistor 24 is OFF, the reverse bias voltage V_SPAD is not applied to the photodiode 21, and therefore the operation of the photodiode 21 is prohibited.

When a photon is incident on the photodiode 21 while the selection transistor 24 is ON, an avalanche current is generated in the photodiode 21. As a result, the avalanche current flows through the quench resistor 23, and the voltage at the connection point N1 increases. When the voltage at the connection point N1 becomes higher than the on-voltage of the NMOS transistor 252, the NMOS transistor 252 is turned on, and the voltage at the connection point N2 changes from the power supply voltage VDD to 0 V. Then, when the voltage at the connection point N2 changes from the power supply voltage VDD to 0 V, the PMOS transistor 261 changes from OFF to ON, the NMOS transistor 262 changes from ON to OFF, and the voltage at a connection point N3 changes from 0 V to the power supply voltage VDD. As a result, the high-level detection signal V_OUT is output from the buffer 27.

Thereafter, when the voltage at the connection point N1 continues to increase, the voltage applied between the anode and the cathode of the photodiode 21 becomes smaller than the breakdown voltage, whereby the avalanche current stops and the voltage at the connection point N1 decreases. Then, when the voltage at the connection point N1 becomes lower than the on-voltage of an NMOS transistor 452, the NMOS transistor 452 is turned off, and the output of the detection signal V_OUT from the buffer 27 is stopped (low level).

As described above, the readout circuit 22 outputs the high-level detection signal V_OUT during a period from the timing at which a photon is incident on the photodiode 21 to generate the avalanche current and the NMOS transistor 452 is turned on, to the timing at which the avalanche current stops and the NMOS transistor 452 is turned off. The output detection signal V_OUT is input to the SPAD addition unit 40 for each macropixel 30 via the output circuit 145. Therefore, the detection signal V_OUT of the number (detection number) of SPAD pixels 20 in which incidence of a photon is detected among the plurality of SPAD pixels 20 included in one macropixel 30 is input to each SPAD addition unit 40.

1.7 SPAD addition unit

Fig. 6 is a block diagram illustrating a more detailed configuration example of the SPAD addition unit according to the present embodiment. Note that the SPAD addition unit 40 may be included in the light receiving unit 14 or may be included in the calculation unit 15.

As illustrated in Fig. 6, the SPAD addition unit 40 includes, for example, a pulse shaping unit 41 and a light reception number counting unit 42.

The pulse shaping unit 41 shapes the pulse waveform of the detection signal V_OUT input from the SPAD array 141 via the output circuit 145 into a pulse waveform having a time width according to an operation clock of the SPAD addition unit 40.

The light reception number counting unit 42 counts the detection signal V_OUT input from the corresponding macropixel 30 for each sampling period, thereby counting the number (detection number) of the SPAD pixels 20 in which incidence of a photon is detected for each sampling period, and outputs the count value as the pixel value of the macropixel 30.

1.8 Sampling period

Here, a sampling period is a period of measuring a time (flight time) from when the light emitting unit 13 emits the laser light L1 to when the light receiving unit 14 detects incidence of a photon. As the sampling period, a period shorter than the light emission period of the light emitting unit 13 is set. For example, by shortening the sampling period, it is possible to calculate the flight time of the photon emitted from the light emitting unit 13 and reflected by the object 90 with a higher time resolution. This means that the distance to the object 90 can be calculated with a higher distance measurement resolution by increasing the sampling frequency.

For example, when a flight time until the light emitting unit 13 emits the laser light L1, the laser light L1 is reflected by the object 90, and the reflected light L2 is incident on the light receiving unit 14 is t, since a light speed C is constant (C ≈ 300 million m (meter)/s (second), a distance L to the object 90 can be calculated by the following equation (1).

$$L = C \times t/2 \qquad (1)$$

Therefore, when the sampling frequency is 1 GHz, the sampling period is 1 ns (nanosecond). In that case, one sampling period corresponds to 15 cm (centimeter). This indicates that the distance measurement resolution is 15 cm in a case where the sampling frequency is 1 GHz. Furthermore, when the sampling frequency is 2 GHz, which is twice the sampling frequency, the sampling period is 0.5 ns (nanoseconds), and thus one sampling period corresponds to 7.5 cm (centimeters). This indicates that the distance measurement resolution can be set to 1/2 in a case where the sampling frequency is doubled. In this way, by increasing the sampling frequency and shortening the sampling period, the distance to the object 90 can be calculated more accurately.

1.9 Scanning timing of light emitting unit and light receiving unit

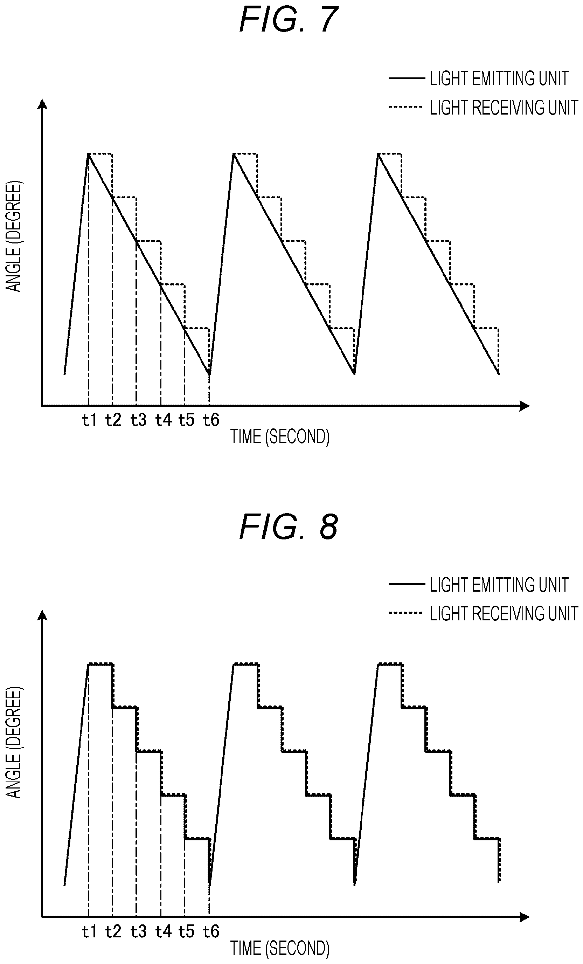

Here, scanning timings of the light emitting unit 13 and the light receiving unit 14 will be described with reference to Fig. 7. Fig. 7 is a diagram illustrating scanning timings of the light emitting unit 13 and the light receiving unit 14. Note that Fig. 7 illustrates an example in which the distance measurement range AR (see Fig. 2) is scanned three times.

The control unit 11 performs control to read a detection signal from a light receiving element in a position corresponding to the scanning position of the light emitting unit 13 among the plurality of light receiving elements and measure a distance. Specifically, the control unit 11 reads the detection signal of the SPAD pixel 20 included in the SPAD array 142 corresponding to the scanning position of the light emitting unit 13 in the SPAD array 141.

More specifically, as illustrated in Fig. 7, at time t1, the control unit 11 starts scanning of the laser light L1 by the light emitting unit 13, and reads the SPAD array 142 in a position corresponding to the scanning position of the light emitting unit 13 in the SPAD array 141. For example, in a case where the light emitting unit 13 scans the distance measurement range AR from the left end to the right end, the reading position at time t1 is the first SPAD array 142 at the left end of the SPAD array 141. That is, the control unit 11 aligns the scanning start position (angle) of the light emitting unit 13 with the scanning start position (angle) of the light receiving unit 14.

Then, as illustrated in Fig. 7, while the light scanning of the light emitting unit 13 is linear, the readout scanning of the light receiving unit 14 is stepwise. That is, the control unit 11 gradually changes the scanning position of the light emitting unit 13, and changes the scanning position (reading position) of the light receiving unit 14 in units of predetermined angles. Then, in the example illustrated in Fig. 7, the control unit 11 reads the first SPAD array 142 from time t1 to time t2.

Then, at time t2, the control unit 11 reads the SPAD array 142 in the position corresponding to the scanning position of the light emitting unit 13, that is, the second SPAD array 142 located on the right of the SPAD array 142 at the left end. Thereafter, similarly, the control unit 11 reads the SPAD array 142 on the right at each of time t3, time t4, time t5, and time t6, and reads the SPAD array 142 on the right end at time t6.

As described above, the control unit 11 can efficiently receive (read) the light of the light emitting unit 13 in the light receiving unit 14 by reading the SPAD array 142 in a position corresponding to the scanning position of the light emitting unit 13 in the light receiving unit 14 in which the SPAD pixels 20 are two-dimensionally arranged.

Note that while Fig. 7 illustrates a case where the light emitting unit 13 is caused to scan linearly, as illustrated in Fig. 8, for example, light scanning by the light emitting unit 13 may be stepwise. Fig. 8 is a diagram illustrating scanning timings of a light emitting unit 13 and a light receiving unit 14 according to a modification.

As illustrated in Fig. 8, a control unit 11 causes the light emitting unit 13 to scan light stepwise. That is, the control unit 11 changes the scanning position of each of the light emitting unit 13 and the light receiving unit 14 at every predetermined angle. Specifically, as illustrated in Fig. 8, the control unit 11 causes the light emitting unit 13 to emit light with the scanning position of the light emitting unit 13 fixed at a predetermined angle in a period from time t1 to time t2.

Furthermore, the control unit 11 reads a SPAD array 142 in a position corresponding to the scanning position of the light emitting unit 13 from time t1 to time t2.

Then, at time t2, the control unit 11 changes the scanning position of the light emitting unit 13 to the next predetermined angle, and reads the next SPAD array 142 (SPAD array 142 on the right) in the light receiving unit 14.

That is, the control unit 11 makes the scanning position of the light emitting unit 13 stepwise in accordance with the scanning of the light receiving unit 14. As a result, the difference in angle of view between the light emitting unit 13 and the light receiving unit 14 is eliminated, so that the light receiving unit 14 can efficiently receive the light of the light emitting unit 13.

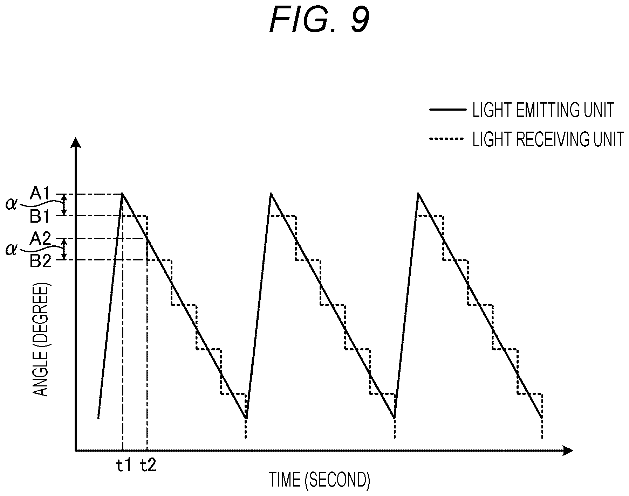

Furthermore, the control unit 11 is not limited to the case of causing the light emitting unit 13 to scan in a stepwise manner, and for example, as illustrated in Fig. 9, the scanning position of the light receiving unit 14 may be shifted from the scanning position of the light emitting unit 13. Fig. 9 is a diagram illustrating scanning timings of a light emitting unit 13 and a light receiving unit 14 according to a modification.

As illustrated in Fig. 9, a control unit 11 reads a SPAD array 142 in a position shifted by a predetermined shift angle $\alpha$ from the angle of the light emitting unit 13 scanning linearly. That is, the control unit 11 makes the scanning start position of the light emitting unit 13 and the scanning start position of the light receiving unit 14 different by the shift angle $\alpha$. Specifically, as illustrated in Fig. 9, the control unit 11 starts scanning by the light emitting unit 13 from an angle A1 at time t1.

On the other hand, the control unit 11 performs control to read the SPAD array 142 in the position corresponding to an angle B1 at time t1. Note that the angle B1 is smaller than the angle A1 by the shift angle $\alpha$. More specifically, the shift angle $\alpha$ is an angle corresponding to an angle interval of the light receiving unit 14, that is, an angle corresponding to substantially half of a change amount from the angle B1 to an angle B2.

Then, at time t2 when the scanning position of the light emitting unit 13 reaches an angle A2, the control unit 11 changes the scanning position of the light receiving unit 14 from the angle B1 to the angle B2 to perform scanning. That is, the control unit 11 changes the scanning position of the light receiving unit 14 every predetermined angle.

As a result, between time t1 and time t2, the shift between the scanning position of the light emitting unit 13 and the scanning position of the light receiving unit 14 falls within the shift angle α at the maximum. For this reason, it is possible to curb a decrease in light receiving efficiency by the light receiving unit 14.

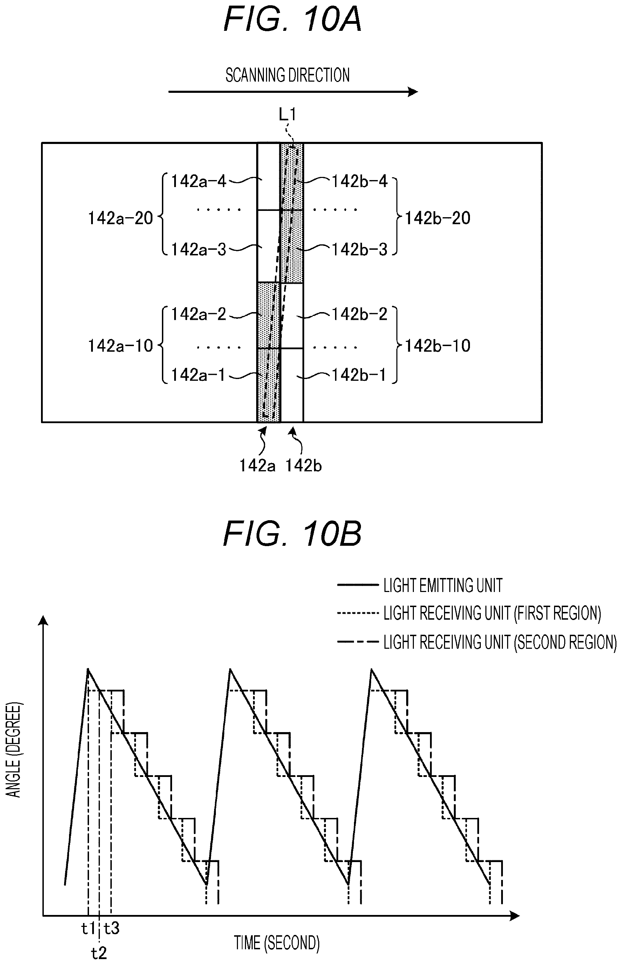

Note that the scanning timings of the light emitting unit 13 and the light receiving unit 14 illustrated in Figs. 7 to 9 are based on the assumption that the scanning positions are substantially parallel. However, in a case where the scanning positions of the light emitting unit 13 and the light receiving unit 14 are not substantially parallel, it is necessary to change the scanning timing. This point will be described with reference to Figs. 10A and 10B.

Figs. 10A and 10B are diagrams illustrating scanning timings of a light emitting unit 13 and a light receiving unit 14 according to a modification. Fig. 10A illustrates an example in which the scanning position of a laser light L1 (reflected light L2) of the light emitting unit 13 is not substantially parallel to the scanning position (SPAD arrays 142a, 142b) of the light receiving unit 14.

Regarding the scanning position of the laser light L1 illustrated in Fig. 10A, it cannot be said that the light receiving efficiency is high by reading any of a SPAD array 142a and a SPAD array 142b.

Therefore, the control unit 11 divides the SPAD array 142a and the SPAD array 142b into a plurality of regions and reads the regions in units of the divided regions. While Fig. 10A illustrates an example in which each of the SPAD arrays 142a and 142b is divided into four SPAD regions 142a-1 to 142a-4 and 142b-1 to 142b-4 (see Fig. 4), the number of divisions may be three or less or five or more.

Note that in Fig. 10A, the two SPAD regions 142a-1 and 142a-2, and 142b-1 and 142b-2 on the lower side are referred to as first regions 142a-10 and 142b-10, and the two SPAD regions 142a-3 and 142a-4, and 142b-3 and 142b-4 on the upper side are referred to as second regions 142a-20 and 142b-20.

The control unit 11 shifts the scanning timing between the first regions 142a-10 and 142b-10 and the second regions 142a-20 and 142b-20. Specifically, the control unit 11 performs control to scan the first region 142a-10 of the SPAD array 142a and the second region 142b-20 of the SPAD array 142b at the same scanning timing.

In other words, the control unit 11 makes the scanning timing different between the first region 142a-10 and the second region 142a-20 in the SPAD array 142a. For example, the control unit 11 performs control to scan the second region 142a-20 of the SPAD array 142a at an earlier scanning timing than the first region 142a-10 of the SPAD array 142a and the second region 142b-20 of the SPAD array 142b.

Furthermore, the control unit 11 performs control to scan the first region 142b-10 of the SPAD array 142b at a later scanning timing than the first region 142a-10 of the SPAD array 142a and the second region 142b-20 of the SPAD array 142b.

A more specific description will be given with reference to Fig. 10B. Fig. 10B illustrates scanning timings of the first region 142-10 and the second region 142-20 in one SPAD array 142.

As illustrated in Fig. 10B, at time t1, the control unit 11 starts scanning of the laser light L1 by the light emitting unit 13 and scans the first region 142-10 in the SPAD array 142.

Then, the control unit 11 performs control to scan the second region 142-20 in the SPAD array 142 at time t2. Note that time t2 is substantially in between time t1 and time t3. Then, at time t3, the control unit 11 moves the scanning position of the first region 142-10 in the SPAD array 142 to the right adjacent. side

As a result, even in a case where the scanning position of the light L1 of the light emitting unit 13 is not substantially parallel to the SPAD array 142, it is possible to curb a decrease in light receiving efficiency in the light receiving unit 14.

1.10 Abnormality detection in light emitting unit

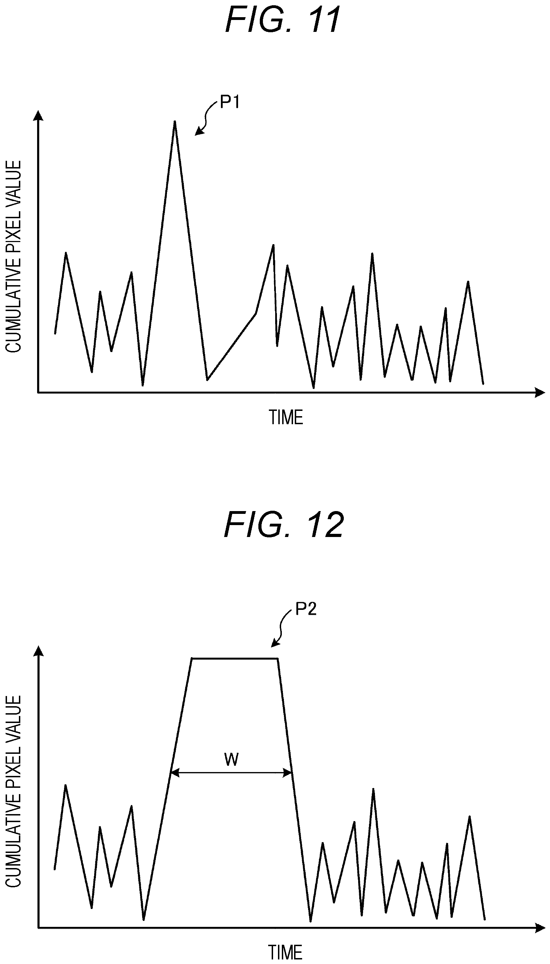

Next, an abnormality detection method for the light emitting unit 13 will be described with reference to Figs. 11 and 12. Figs. 11 and 12 are diagrams for describing an abnormality detection method for the light emitting unit 13. For example, when scanning is stopped due to a failure of the drive unit 134 or the galvano mirror 135 of the light emitting unit 13, light is emitted only to a specific position in the distance measurement range AR. In this case, distance cannot be measured, and there is a possibility that the laser light cannot satisfy the safety standard of class 1.

In this regard, conventionally, abnormality of the light emitting unit has been detected by branching the optical path of the light emitting unit, causing a part of the light to be incident on a dedicated photodetector or the like, and monitoring whether the light is correctly projected.

However, with the conventional technology, it is difficult to cope with various failure factors of the light emitting unit, and since it is necessary to add dedicated components, there have been problems of an increase in cost and a decrease in efficiency of the device.

Against this background, the control unit 11 detects abnormality in which scanning of the light emitting unit 13 is stopped. Specifically, the control unit 11 detects abnormality of the light emitting unit 13 in a case where a cumulative pixel value based on the detection signal of each of a predetermined number of SPAD pixels 20 output from the light receiving unit 14 is equal to or greater than a predetermined threshold.

Figs. 11 and 12 illustrate histograms generated by the above-described calculation unit 15. Specifically, Figs. 11 and 12 illustrate a gram obtained by linearizing a histogram in which the vertical axis represents the cumulative pixel value and the horizontal axis represents time (flight time).

Note that Fig. 11 is a graph in a case where the light emitting unit 13 is normal, and Fig. 12 is a graph in a case where the pulse width of the light emitting unit 13 is abnormal. As illustrated in Fig. 11, in the case where the light emitting unit 13 is normal, a peak P1 corresponding to the object 90 (see Fig. 1) that is a reflector appears. The peak P1 has a peak width close to the pulse width of the laser light L1. However, as illustrated in Fig. 12, in the case where abnormality occurs in the light emitting unit 13, the pulse width of the laser light L1 increases, and a peak width W of a peak P2 inevitably increases as well.

Focusing on such a point, the control unit 11 detects abnormality of the light emitting unit 13 in a case where the detected peak width W of the peak P2 is equal to or greater than a predetermined threshold. As a result, it is possible to detect abnormality of the light emitting unit 13 accurately.

Note that the threshold of the peak width W is set to a value corresponding to the pulse width of the laser light L1. That is, in a case where the light emitting unit 13 is normal, the peak width of the peak P1, which is the reflected light L2, and the pulse width of the laser light L1 are substantially the same. Therefore, in a case where the peak width W of the peak P2 is greater than the pulse width of the laser light L1 by a predetermined value or more, it is determined that the light emitting unit 13 is abnormal.

Furthermore, since the control unit 11 detects abnormality of the light emitting unit 13 from the detection signal of the light receiving unit 14 for measuring distance, a dedicated photodetector for detecting the laser light is not required as in the conventional case. Hence, according to the control unit 11 of the embodiment, it is possible to detect abnormality of the light emitting unit 13 with high accuracy at low cost.

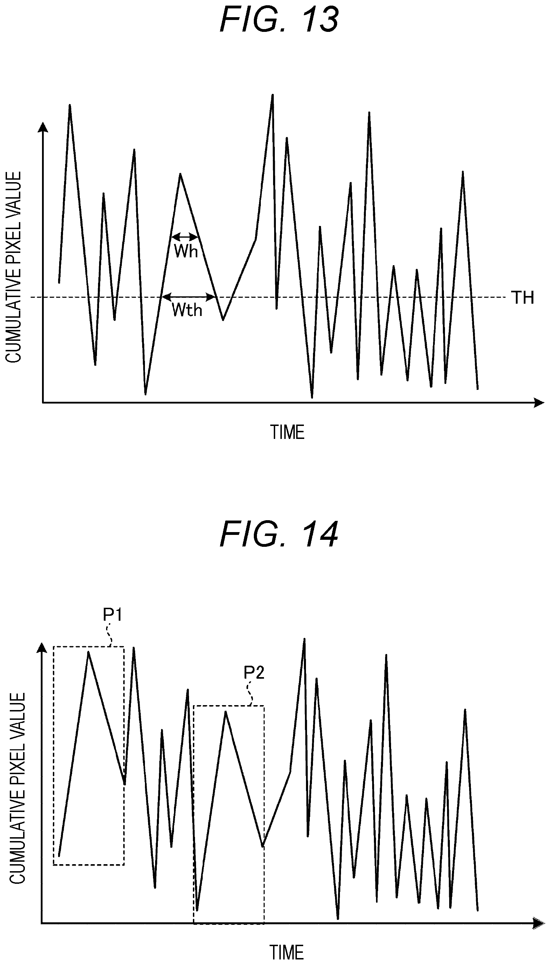

Note that while the position (cumulative pixel value) of the peak width W may be any position, abnormality may be detected by the peak width W of the cumulative pixel value at a threshold TH (Fig. 13) for peak detection described later, for example. Alternatively, abnormality may be detected by the peak width W in the middle (half value) between the peak value and the threshold TH.

Furthermore, as a method of detecting abnormality in which scanning of the light emitting unit 13 is stopped, the control unit 11 uses a detection method based on the amount of received light of the light receiving element for each row or each column of the light receiving unit 14 in which light receiving elements (SPAD pixels 20) are two-dimensionally arranged.

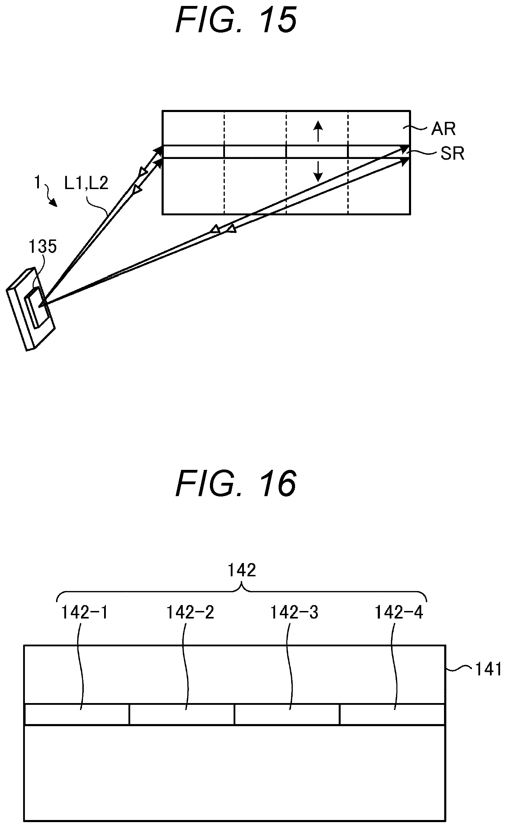

Specifically, the control unit 11 detects abnormality in which scanning of the light emitting unit 13 is stopped in a case where the amount of received light (cumulative pixel value) of the light receiving element in a specific row or column among the light receiving elements arranged two-dimensionally in the row and column directions is equal to or greater than a predetermined threshold. Note that in a case where the scanning direction of the light emitting unit 13 is the horizontal direction (Fig. 2), the control unit 11 detects abnormality on the basis of the amount of received light of the light receiving elements for each column, and in a case where the scanning direction of the light emitting unit 13 is the vertical direction (Fig. 15), the control unit 11 detects abnormality on the basis of the amount of received light of the light receiving elements for each row. As a result, it is possible to detect abnormality in which scanning of the light emitting unit 13 is stopped with high accuracy.

1.11 Discrimination between reflected light and ambient light

Next, discrimination processing between the reflected light L2 and ambient light will be described with reference to Figs. 13 and 14. Figs. 13 and 14 are diagrams illustrating the discrimination processing of the reflected light L2 and ambient light. Ambient light here is light caused by a surrounding environment such as sunlight. In a case where such ambient light is relatively strong, the reflected light L2 may be buried due to ambient light in the histogram described above, and there is a possibility that distance cannot be measured correctly. In particular, in a case where the distance to the object 90 is long and a sufficient amount of reflected light L2 cannot be obtained, the distance cannot be measured accurately if the ambient light is strong.

Therefore, the control unit 11 discriminates a peak corresponding to the reflected light L2 from a peak corresponding to ambient light on the basis of the histogram generated by the calculation unit 15. Specifically, the control unit 11 detects a peak at which the calculated value and the peak width satisfy a predetermined condition from a plurality of peaks included in the histogram.

Specifically, as illustrated in Fig. 13, the control unit 11 first extracts a peak at which the cumulative pixel value is equal to or greater than the predetermined threshold TH from among the plurality of peaks included in the histogram. Then, the control unit 11 detects, as the reflected light L2, a peak at which the peak width is equal to or greater than a predetermined threshold among the extracted peaks.

For example, the control unit 11 performs detection processing using a peak width Wth of the cumulative pixel value at the threshold TH. Alternatively, the control unit 11 may perform detection processing using a peak width Wh in the middle (half value) between the peak value and the threshold TH. Alternatively, detection processing may be performed using both the peak width Wth and the peak width Wh.

In other words, the control unit 11 detects a peak at which the cumulative pixel value is less than the predetermined threshold TH or a peak at which the peak widths Wth and Wh are less than the predetermined threshold as ambient light. As described above, the control unit 11 can discriminate between the reflected light L2 and ambient light by using the cumulative pixel value and the peak width of the histogram. That is, since the control unit 11 according to the embodiment can discriminate between ambient light and the reflected light L2 even in an environment where ambient light is strong, it is possible to measure distance with high accuracy.

Note that the control unit 11 may further extract a peak that satisfies a predetermined condition in a case where there are a predetermined number or more of peaks at which the cumulative pixel value is equal to or greater than the predetermined threshold TH. For example, the control unit 11 may extract a predetermined number of peaks in ascending order of time (in ascending order of distance) among peaks at which the cumulative pixel value is equal to or greater than the predetermined threshold TH. As a result, for example, in a case where the invention is applied to an emergency brake or the like of a vehicle, it is possible to detect the object 90 at a short distance at an early stage.

Furthermore, the control unit 11 may extract a predetermined number of peaks in descending order of the cumulative pixel value among peaks at which the cumulative pixel value is equal to or greater than the predetermined threshold TH. As a result, a peak having high reliability as the reflected light L2 can be extracted, so that it is possible to detect (measure the distance of) the object 90 with higher accuracy.

Note that the control unit 11 may discriminate between the reflected light L2 and ambient light on the basis of a shape of the laser light L1 reflected inside the ToF sensor 1, for example. This point will be described with reference to Fig. 14.

As illustrated in Fig. 14, the control unit 11 first extracts a peak P1 detected at a short distance in less than a predetermined time as a laser light L1 resulting from internal reflection. Note that whether or not the peak P1 is the laser light L1 resulting from internal reflection may be determined on the basis of a peak shape at the time of internal reflection of the laser light L1 obtained in advance by an experiment or the like, for example.

Then, the control unit 11 detects, as the reflected light L2, a peak P2 having a peak shape similar to the peak P1 that is an internal reflection of the laser light L1. Specifically, the control unit 11 detects the peak P2 having similar feature amounts related to the peak shape of the peak P1. Note that the feature amount is, for example, information regarding a cumulative pixel value or a peak width serving as a peak value. For example, the control unit 11 may image the histogram and search for the peak P2 by pattern matching.

In this way, by using the peak shape of the peak P1 of internal reflection, it is possible to detect the reflected light L2 with high accuracy.

Note that while the case where the angle of view of the light emitting unit 13 is scanned in the horizontal direction has been described above as an example, the angle of view of the light emitting unit 13 may be scanned in the vertical direction. This point will be described with reference to Figs. 15 and 16.

Fig. 15 is a diagram illustrating a scanning direction of a light emitting unit 13 according to a modification. Fig. 16 is a diagram illustrating a scanning direction of a light receiving unit 14 according to the modification.

As illustrated in Fig. 15, a laser light L1 emitted from a galvano mirror 135 of the light emitting unit 13 is rectangular parallel light in which the intensity spectrum of the cross section is long in the horizontal direction. Then, for example, galvano mirror 135 is vibrated in the vertical direction about a predetermined rotation axis by a drive unit 134 (see Fig. 2) that operates on the basis of control by a control unit 11. As a result, the laser light L1 is vertically scanned such that an angle of view SR of the laser light L1 reflected by the galvano mirror 135 reciprocates in the vertical direction in a distance measurement range AR.

The laser light L1 reflected by the galvano mirror 135 is reflected by the object 90 existing in the distance measurement range AR and is incident on the galvano mirror 135 as the reflected light L2. The reflected light L2 incident on the galvano mirror 135 is incident on the light receiving unit 14.

Then, as illustrated in Fig. 16, the light receiving unit 14 reads a SPAD array 142 in the row corresponding to the scanning position of the light emitting unit 13 among the light receiving elements (SPAD array 141) arranged two-dimensionally. Note that as illustrated in Fig. 16, the region shape of the SPAD array 142 to be read is a rectangular shape long in the horizontal direction, which corresponds to the fact that the laser light L1 is a rectangular shape long in the horizontal direction. Hence, SPAD regions 142-1 to 142-4 obtained by dividing the SPAD array 142 are divided in the horizontal direction and have a rectangular shape long in the horizontal direction.

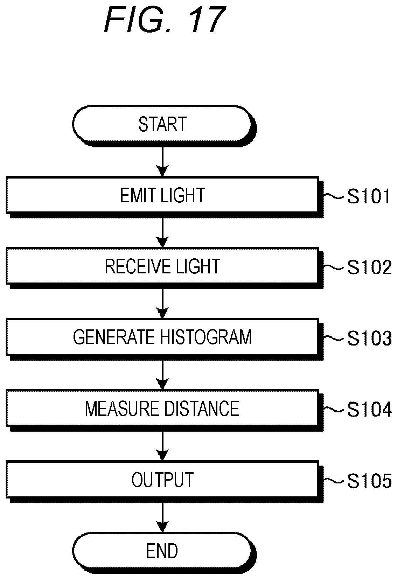

Next, a processing procedure of processing executed by the ToF sensor 1 will be described with reference to Figs. 17 to 19. Fig. 17 is a flowchart illustrating a processing procedure of the entire processing executed by the ToF sensor 1.

As illustrated in Fig. 17, the light emitting unit 13 emits the laser light L1 by emitting light (step S101).

Subsequently, the light receiving unit 14 receives the reflected light L2 obtained by the laser light L1 being reflected by the object 90 (step S102).

Subsequently, the calculation unit 15 generates a histogram of the cumulative pixel value on the basis of the detection signals output from the light receiving unit 14 (step S103).

Subsequently, the control unit 11 calculates the distance to the object 90 on the basis of the generated histogram (step S104).

Subsequently, the control unit 11 outputs the calculated distance to the host 80 (step S105), and ends the processing.

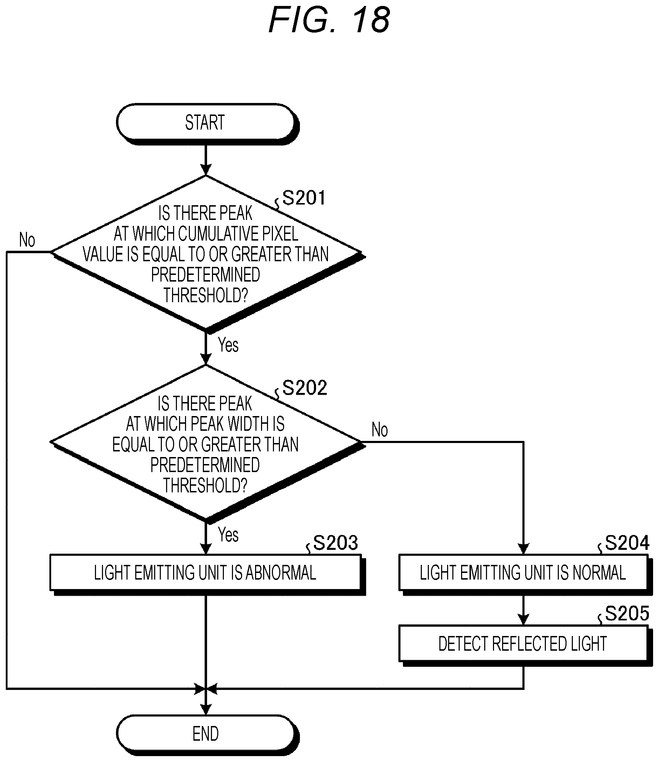

Fig. 18 is a flowchart illustrating a processing procedure of abnormality detection processing executed by the ToF sensor 1.

As illustrated in Fig. 18, the control unit 11 determines whether or not there is a peak at which the cumulative pixel value is equal to or greater than a predetermined threshold among a plurality of peaks included in the histogram (step S201). If there is no peak at which the cumulative pixel value is equal to or greater than the predetermined threshold (step S201: No), the control unit 11 ends the processing.

If there is a peak at which the cumulative pixel value equal to or greater than the predetermined threshold (step S201: Yes), the control unit 11 determines whether or not there is a peak at which the peak width W is equal to or greater than a predetermined threshold among such peaks (step S202).

If there is a peak at which the peak width W is equal to or greater than the predetermined threshold (step S202: Yes), the control unit 11 detects that the light emitting unit 13 is abnormal (step S203), and ends the processing.

On the other hand, if there is no peak at which the peak width W is equal to or greater than the predetermined threshold (step S202: No), the control unit 11 detects that the light emitting unit 13 is normal (step S204).

Subsequently, the control unit 11 detects the reflected light L2 from among peaks at which the cumulative pixel value is equal to or greater than a predetermined threshold (step S205), and ends the processing.

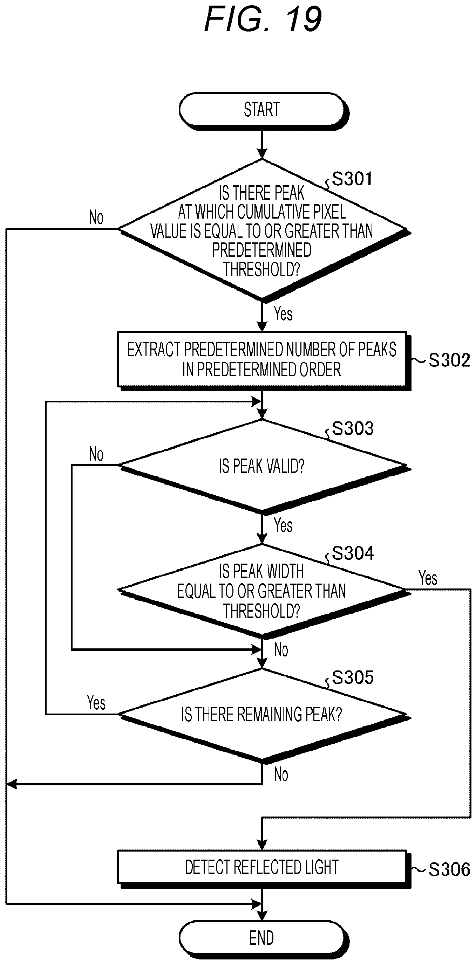

Fig. 19 is a flowchart illustrating a processing procedure of detection processing executed by the ToF sensor 1.

As illustrated in Fig. 19, the control unit 11 determines whether or not there is a peak at which the cumulative pixel value is equal to or greater than the predetermined threshold (step S301), and if there is no peak at which the cumulative pixel value is equal to or greater than the predetermined threshold (step S301: No), the control unit 11 ends the processing.

If there is a peak at which the cumulative pixel value is equal to or greater than the predetermined threshold (step S301: Yes), the control unit 11 extracts a predetermined number of peaks in a predetermined order (step S302). For example, the control unit 11 extracts a predetermined number of peaks in descending order of cumulative pixel values or in ascending order of time.

Subsequently, the control unit 11 determines whether or not the peaks are valid in a predetermined order (step S303). Whether or not the peaks are valid means, for example, whether or not the shape of the peak or the time of the peak satisfies a predetermined condition.

If the peak is valid (step S303: Yes), the control unit 11 determines whether or not the peak width Wth, Wh of the peak is equal to or greater than a predetermined threshold (step S304). Note that if the peak is invalid (step S303: No) or if the peak width Wth, Wh is less than the predetermined threshold (step S304: No), the control unit 11 determines whether or not there is a remaining peak (step S305). That is, it is determined whether or not there is a peak that has not been subjected to the determination processing in steps S303 to S304 among the peaks extracted in step S302.

If there is a remaining peak (step S305: Yes), the control unit 11 returns to step S303, and if there is no remaining peak (step S305: No), the control unit 11 ends the processing.

On the other hand, in step S304, if the peak width Wth, Wh is equal to or greater than the predetermined threshold (step S304: Yes), the control unit 11 detects the peak as the reflected light L2 (step S306), and ends the processing.

2. Application example

The technology according to the present disclosure can be applied to various products. For example, the technology according to the present disclosure may be implemented as a device mounted on any type of movable bodies including an automobile, an electric vehicle, a hybrid electric vehicle, a motorcycle, a bicycle, a personal mobility, an airplane, a drone, a ship, a robot, a construction machine, an agricultural machine (tractor), and the like.

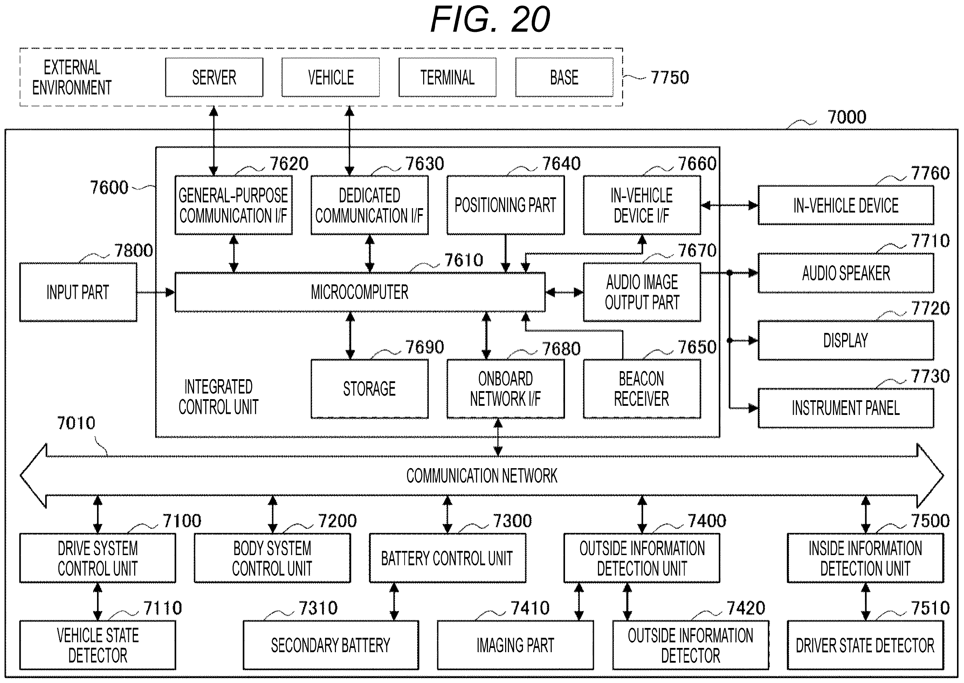

Fig. 20 is a block diagram illustrating a schematic configuration example of a vehicle control system 7000 which is an example of a mobile control system to which the technology according to the present disclosure can be applied. The vehicle control system 7000 includes a plurality of electronic control units connected through a communication network 7010. In the example illustrated in Fig. 20, the vehicle control system 7000 includes a drive system control unit 7100, a body system control unit 7200, a battery control unit 7300, an outside information detection unit 7400, an inside information detection unit 7500, and an integrated control unit 7600. The communication network 7010 connecting the plurality of control units may be an in-vehicle communication network compliant with any standard such as controller area network (CAN), local interconnect network (LIN), local area network (LAN), and FlexRay (registered trademark), for example.

Each control unit includes a microcomputer that performs arithmetic processing according to various programs, a storage that stores a program executed by the microcomputer or parameters or the like used for various arithmetic operations, and a drive circuit that drives various devices to be controlled. Each control unit includes a network I/F for communicating with other control units through the communication network 7010, and a communication I/F for communicating with devices, sensors, or the like inside and outside the vehicle by wired communication or wireless communication. In Fig. 20, as the functional configuration of the integrated control unit 7600, a microcomputer 7610, a general-purpose communication I/F 7620, a dedicated communication I/F 7630, a positioning part 7640, a beacon receiver 7650, an in-vehicle device I/F 7660, an audio image output part 7670, an onboard network I/F 7680, and a storage 7690 are illustrated. The other control units similarly include a microcomputer, a communication I/F, a storage, and the like.

The drive system control unit 7100 controls the operation of devices related to the drive system of the vehicle according to various programs. For example, the drive system control unit 7100 functions as a controller of a drive force generation device for generating a drive force of a vehicle, such as an internal combustion engine or a drive motor, a drive force transmission mechanism for transmitting the drive force to wheels, a steering mechanism that adjusts the steering angle of the vehicle, a braking device that generates a braking force of the vehicle, and the like. The drive system control unit 7100 may have a function as a controller of an antilock brake system (ABS), an electronic stability control (ESC), or the like.

A vehicle state detector 7110 is connected to the drive system control unit 7100. The vehicle state detector 7110 includes, for example, at least one of a gyro sensor that detects the angular velocity of the shaft rotational movement of the vehicle body, an acceleration sensor that detects the acceleration of the vehicle, or a sensor for detecting an accelerator pedal operation amount, a brake pedal operation amount, a steering wheel steering angle, an engine speed, a wheel rotation speed, or the like. The drive system control unit 7100 performs arithmetic processing using a signal input from the vehicle state detector 7110 to control an internal combustion engine, a drive motor, an electric power steering device, a brake device, or the like.

The body system control unit 7200 controls the operation of various devices equipped on the vehicle body according to various programs. For example, the body system control unit 7200 functions as a controller of a keyless entry system, a smart key system, a power window device, or various lamps such as a headlamp, a back lamp, a brake lamp, a blinker, or a fog lamp. In this case, the body system control unit 7200 may receive input of radio waves transmitted from a portable device substituting for a key or signals of various switches. The body system control unit 7200 receives input of these radio waves or signals, and controls a door lock device, a power window device, a lamp, and the like of the vehicle.

The battery control unit 7300 controls a secondary battery 7310 that is the power supply source of the drive motor according to various programs. For example, the battery control unit 7300 receives input of information such as the battery temperature, the battery output voltage, or the remaining capacity of the battery from a battery device including the secondary battery 7310. The battery control unit 7300 performs arithmetic processing using these signals to control the temperature adjustment of the secondary battery 7310 or control a cooling device or the like provided in the battery device.

The outside information detection unit 7400 detects information outside the vehicle equipped with the vehicle control system 7000. For example, at least one of an imaging part 7410 or an outside information detector 7420 is connected to the outside information detection unit 7400. The imaging part 7410 includes at least one of a time of flight (ToF) camera, a stereo camera, a monocular camera, an infrared camera, or other cameras. The outside information detector 7420 includes at least one of an environment sensor for detecting the current weather, or an ambient information detection sensor for detecting another vehicle, an obstacle, a pedestrian, or the like around the vehicle equipped with the vehicle control system 7000, for example.

The environment sensor may be at least one of a raindrop sensor that detects rainy weather, a fog sensor that detects fog, a sunshine sensor that detects the degree of sunshine, or a snow sensor that detects snowfall, for example. The ambient information detection sensor may be at least one of an ultrasonic sensor, a radar device, or a light detection and ranging or laser imaging detection and ranging (LIDAR) device. The imaging part 7410 and the outside information detector 7420 may be provided as independent sensors or devices, or may be provided as a device in which a plurality of sensors or devices is integrated.

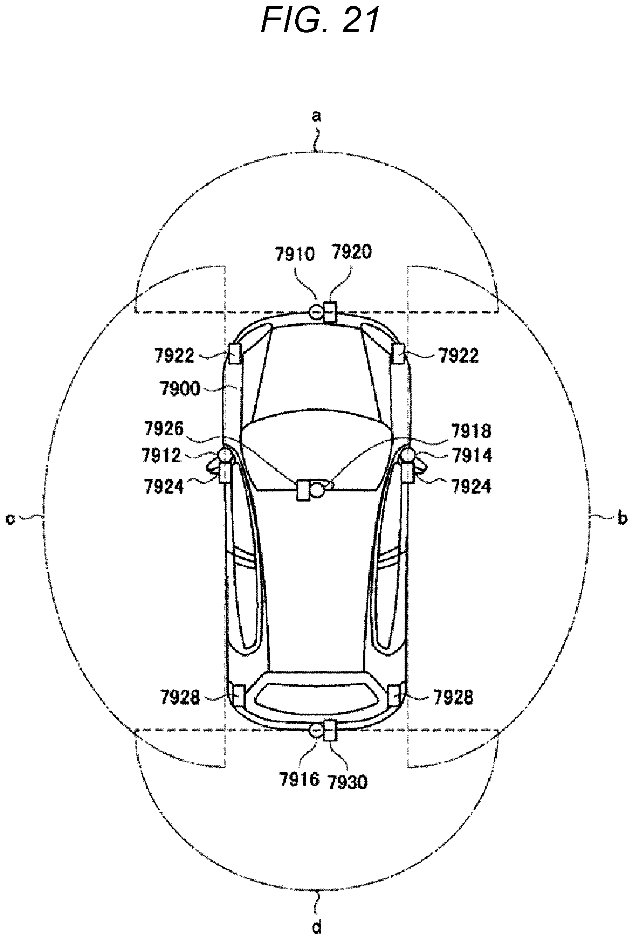

Here, Fig. 21 is a diagram illustrating an example of the installation positions of the imaging part 7410 and the outside information detector 7420. For example, imaging parts 7910, 7912, 7914, 7916, and 7918 are provided in at least one of positions of a front nose, a side mirror, a rear bumper, a back door, or an upper part of a windshield in the vehicle interior of a vehicle 7900. The imaging part 7910 provided on the front nose and the imaging part 7918 provided on the upper part of the windshield in the vehicle interior mainly acquire images of the front of the vehicle 7900. The imaging parts 7912 and 7914 provided on the side mirrors mainly acquire images of the sides of the vehicle 7900. The imaging part 7916 provided on the rear bumper or the back door mainly acquires an image of the rear of the vehicle 7900. The imaging part 7918 provided on the upper part of the windshield in the vehicle interior is mainly used to detect a preceding vehicle, or a pedestrian, an obstacle, a traffic light, a traffic sign, a lane, or the like.

Note that Fig. 21 illustrates an example of the imaging ranges of the imaging parts 7910, 7912, 7914, and 7916. An imaging range a indicates the imaging range of the imaging part 7910 provided on the front nose, imaging ranges b and c indicate the imaging ranges of the imaging parts 7912 and 7914 provided on the side mirrors, respectively, and an imaging range d indicates the imaging range of the imaging part 7916 provided on the rear bumper or the back door. For example, by superimposing the pieces of image data captured by the imaging parts 7910, 7912, 7914, and 7916, a bird's eye view image of the vehicle 7900 as viewed from above can be obtained.

Outside information detectors 7920, 7922, 7924, 7926, 7928, and 7930 provided on the front, rear, sides, corners, and the upper part of the windshield in the vehicle interior of the vehicle 7900 may be ultrasonic sensors or radar devices, for example. The outside information detectors 7920, 7926, and 7930 provided on the front nose, the rear bumper, the back door, and the upper part of the windshield in the vehicle interior of the vehicle 7900 may be LIDAR devices, for example. These outside information detectors 7920 to 7930 are mainly used for detecting a preceding vehicle, a pedestrian, an obstacle, or the like.

Returning to Fig. 20, the description will be continued. The outside information detection unit 7400 causes the imaging part 7410 to capture an image of the outside of the vehicle, and receives the captured image data. Furthermore, the outside information detection unit 7400 receives detection information from the outside information detector 7420 connected thereto. In a case where the outside information detector 7420 is an ultrasonic sensor, a radar device, or a LIDAR device, the outside information detection unit 7400 causes transmission of ultrasonic waves, electromagnetic waves, or the like, and receives information on the received reflected waves. The outside information detection unit 7400 may perform object detection processing or distance detection processing of a person, a vehicle, an obstacle, a sign, characters on a road surface, or the like on the basis of the received information. The outside information detection unit 7400 may perform environment recognition processing for recognizing rainfall, fog, road surface conditions, or the like on the basis of the received information. The outside information detection unit 7400 may calculate the distance to the object outside the vehicle on the basis of the received information.

Furthermore, the outside information detection unit 7400 may perform image recognition processing or distance detection processing of recognizing a person, a vehicle, an obstacle, a sign, characters on a road surface, or the like on the basis of the received image data. The outside information detection unit 7400 may perform processing such as distortion correction or position adjustment on the received image data, combine pieces of image data captured by different imaging parts 7410, and generate a bird's eye view image or a panoramic image. The outside information detection unit 7400 may perform viewpoint conversion processing using pieces of image data captured by different imaging parts 7410.

The inside information detection unit 7500 detects information inside the vehicle. For example, a driver state detector 7510 that detects a state of a driver is connected to the inside information detection unit 7500. The driver state detector 7510 may include a camera that images the driver, a biometric sensor that detects biometric information of the driver, a microphone that collects voice in the vehicle interior, and the like. For example, the biometric sensor is provided on a seat surface, a steering wheel, or the like, and detects biometric information of an occupant sitting in a seat or a driver who grips the steering wheel. The inside information detection unit 7500 may calculate the degree of fatigue or concentration of the driver or determine whether or not the driver is asleep, on the basis of detection information input from the driver state detector 7510. The inside information detection unit 7500 may perform processing such as noise canceling processing on the collected audio signal.

The integrated control unit 7600 controls overall operations in the vehicle control system 7000 according to various programs. An input part 7800 is connected to the integrated control unit 7600. The input part 7800 is implemented by a device such as a touch panel, a button, a microphone, a switch, or a lever on which an occupant can perform input operation, for example. The integrated control unit 7600 may receive input of data obtained by voice recognition of voice input by a microphone. The input part 7800 may be a remote control device using infrared rays or other radio waves, or an external connection device such as a mobile phone or a personal digital assistant (PDA) compatible with the operation of the vehicle control system 7000, for example. The input part 7800 may be a camera, for example, in which case the occupant can input information by gesture. Alternatively, data obtained by detecting the movement of a wearable device worn by the occupant may be input. Moreover, the input part 7800 may include an input control circuit or the like that generates an input signal on the basis of information input by the occupant or the like using the above input part 7800 and outputs the input signal to the integrated control unit 7600, for example. By operating the input part 7800, the occupant or the like inputs various data or gives an instruction on a processing operation to the vehicle control system 7000.

The storage 7690 may include a read only memory (ROM) that stores various programs executed by the microcomputer, and a random access memory (RAM) that stores various parameters, calculation results, sensor values, or the like. Furthermore, the storage 7690 may be implemented by a magnetic storage device such as a hard disc drive (HDD), a semiconductor storage device, an optical storage device, a magneto-optical storage device, or the like.

The general-purpose communication I/F 7620 is a general-purpose communication I/F that mediates communication with various devices existing in an external environment 7750. The general-purpose communication I/F 7620 may implement a cellular communication protocol such as global system of mobile communications (GSM) (registered trademark), WiMAX (registered trademark), long term evolution (LTE) (registered trademark), or LTE-advanced (LTE-A), or another wireless communication protocol such as wireless LAN (also referred to as Wi-Fi (registered trademark)) or Bluetooth (registered trademark). For example, the general-purpose communication I/F 7620 may connect to a device (e.g., application server or control server) existing in an external network (e.g., Internet, cloud network, or network unique to business operator) through a base station or an access point. Furthermore, for example, the general-purpose communication I/F 7620 may connect with a terminal (e.g., terminal of driver, pedestrian, or store, or machine type communication (MTC) terminal) existing in the vicinity of the vehicle by using the peer to peer (P2P) technology.

The dedicated communication I/F 7630 is a communication I/F that supports a communication protocol designed for use in a vehicle. The dedicated communication I/F 7630 may implement wireless access in vehicle environment (WAVE), which is a combination of the lower layer IEEE802.11p and the upper layer IEEE1609, dedicated short range communications (DSRC), or a standard protocol such as a cellular communication protocol, for example. The dedicated communication I/F 7630 performs V2X communication, which is a concept that typically includes one or more of vehicle to vehicle communication, vehicle to infrastructure communication, vehicle to home communication, and vehicle to pedestrian communication.

For example, the positioning part 7640 receives a global navigation satellite system (GNSS) signal from a GNSS satellite (e.g., global positioning system (GPS) signal from GPS satellite) to perform positioning and generate position information including the latitude, longitude, and altitude of the vehicle. Note that the positioning part 7640 may identify the current position by exchanging signals with a wireless access point, or may acquire position information from a terminal such as a mobile phone, a PHS, or a smartphone having a positioning function.

The beacon receiver 7650 receives radio waves or electromagnetic waves transmitted from a radio station or the like installed on the road, and acquires information such as current location, traffic congestion, traffic restrictions, or required time, for example. Note that the function of the beacon receiver 7650 may be included in the dedicated communication I/F 7630 described above.

The in-vehicle device I/F 7660 is a communication interface that mediates connection between the microcomputer 7610 and various in-vehicle devices 7760 existing in the vehicle. The in-vehicle device I/F 7660 may establish a wireless connection using a wireless LAN, Bluetooth (registered trademark), or a wireless communication protocol such as near field communication (NFC) or Wireless USB (WUSB). Furthermore, the in-vehicle device I/F 7660 may establish a wired connection such as universal serial bus (USB), high-definition multimedia interface (HDMI) (registered trademark), mobile high-definition link (MHL), or the like through a connection terminal (and, if necessary, a cable) not shown. The in-vehicle device 7760 may include at least one of a mobile device or a wearable device that an occupant owns, or an information device that is carried in or attached to the vehicle, for example. Furthermore, the in-vehicle device 7760 may include a navigation device that searches for a route to a freely-selected destination. The in-vehicle device I/F 7660 exchanges control signals or data signals with these in-vehicle devices 7760.

The onboard network I/F 7680 is an interface that mediates communication between the microcomputer 7610 and the communication network 7010. The onboard network I/F 7680 transmits and receives signals and the like according to a predetermined protocol supported by the communication network 7010.

The microcomputer 7610 of the integrated control unit 7600 controls the vehicle control system 7000 according to various programs, on the basis of information acquired through at least one of the general-purpose communication I/F 7620, the dedicated communication I/F 7630, the positioning part 7640, the beacon receiver 7650, the in-vehicle device I/F 7660, or the onboard network I/F 7680. For example, the microcomputer 7610 may calculate a control target value of the drive force generation device, the steering mechanism, or the braking device on the basis of acquired information on the inside and outside of the vehicle, and output a control command to the drive system control unit 7100. For example, the microcomputer 7610 may perform coordinated control aimed to achieve functions of an advanced driver assistance system (ADAS) including collision avoidance or shock mitigation of the vehicle, follow-up traveling based on an inter-vehicle distance, vehicle speed maintenance traveling, vehicle collision warning, vehicle lane departure warning, or the like. Furthermore, the microcomputer 7610 may control the drive force generation device, the steering mechanism, the braking device, or the like on the basis of acquired information on the surroundings of the vehicle, to perform coordinated control aimed for automated driving of traveling autonomously without depending on the driver's operation, for example.

The microcomputer 7610 may generate, on the basis of information acquired through at least one of the general-purpose communication I/F 7620, the dedicated communication I/F 7630, the positioning part 7640, the beacon receiver 7650, the in-vehicle device I/F 7660, or the onboard network I/F 7680, three-dimensional distance information between the vehicle and objects such as surrounding structures and persons, and create local map information including peripheral information of the current position of the vehicle. Furthermore, the microcomputer 7610 may predict a risk of a vehicle collision, proximity of a pedestrian or the like, or entry into a closed road, for example, on the basis of the acquired information, and generate a warning signal. The warning signal may be a signal for sounding a warning sound or lighting a warning lamp, for example.

The audio image output part 7670 transmits an output signal of at least one of audio or image to an output device capable of visually or aurally giving notification of information to an occupant or to the outside of the vehicle. In the example of Fig. 20, an audio speaker 7710, a display 7720, and an instrument panel 7730 are illustrated as examples of the output device. The display 7720 may include at least one of an onboard display or a head-up display, for example. The display 7720 may have an augmented reality (AR) display function. The output device may be a device other than these devices, such as headphones, a wearable device such as an eyeglass-type display worn by an occupant, a projector, or a lamp. In a case where the output device is a display device, the display device visually displays results obtained by various processing performed by the microcomputer 7610 or information received from another control unit in various formats such as text, images, tables, and graphs. Furthermore, in a case where the output device is a voice output device, the voice output device converts an audio signal including reproduced voice data, acoustic data, or the like into an analog signal and outputs the analog signal in an auditory manner.

Note that in the example illustrated in Fig. 20, at least two control units connected through the communication network 7010 may be integrated as one control unit. Alternatively, each control unit may include a plurality of control units. Moreover, the vehicle control system 7000 may include another control unit not shown. Furthermore, in the above description, some or all of the functions of any control unit may be provided in another control unit. That is, as long as information is transmitted and received through the communication network 7010, the predetermined arithmetic processing may be performed by any control unit. Similarly, a sensor or device connected to one of the control units may be connected to another control unit, and a plurality of control units may transmit and receive detection information to and from each other through the communication network 7010.

Note that a computer program for implementing each function of the ToF sensor 1 according to the present embodiment described with reference to Fig. 1 can be installed in any control unit or the like. Furthermore, a computer readable recording medium in which such a computer program is stored can be also provided. The recording medium is, for example, a magnetic disk, an optical disk, a magneto-optical disk, a flash memory, or the like. Furthermore, the above computer program may be distributed through a network without using a recording medium, for example.

In the vehicle control system 7000 described above, the ToF sensor 1 according to the present embodiment described with reference to Fig. 1 can be applied to the integrated control unit 7600 of the application example illustrated in Fig. 20. For example, the control unit 11, the calculation unit 15, and the external I/F 19 of the ToF sensor 1 correspond to the microcomputer 7610, the storage 7690, and the onboard network I/F 7680 of the integrated control unit 7600. Note, however, that the present invention is not limited thereto, and the vehicle control system 7000 may correspond to the host 80 in Fig. 1.

Furthermore, at least some components of the ToF sensor 1 according to the present embodiment described with reference to Fig. 1 may be implemented in a module (e.g., integrated circuit module including one die) for the integrated control unit 7600 illustrated in Fig. 20. Alternatively, the ToF sensor 1 described with reference to Fig. 1 may be implemented by a plurality of control units of the vehicle control system 7000 illustrated in Fig. 20.

3. Summary

As described above, according to the embodiment of the present disclosure, the distance measuring device (ToF sensor 1) according to the present embodiment includes the light emitting unit 13, the light receiving unit 14, and the control unit 11. In the light receiving unit 14, a plurality of light receiving elements (SPAD pixels 20) that receives the reflected light L2, which is the light (laser light L1) of the light emitting unit 13 that has been reflected, is two-dimensionally arranged. The control unit 11 performs control to read the detection signal of each of a predetermined number of light receiving elements among the plurality of light receiving elements and measure distance. The control unit 11 detects abnormality of the light emitting unit 13 on the basis of the calculated value (pixel value and cumulative pixel value) calculated on the basis of the detection signals of the predetermined number of light receiving elements. As a result, it is possible to detect abnormality of the light emitting unit 13 with high accuracy at low cost.

Furthermore, according to the embodiment of the present disclosure, the distance measuring device (ToF sensor 1) according to the present embodiment includes the light emitting unit 13, the light receiving unit 14, and the control unit 11. The light emitting unit 13 emits light (laser light L1) for scanning a predetermined distance measurement range. In the light receiving unit 14, a plurality of light receiving elements (SPAD pixels 20) that receives the reflected light L2, which is the light of the light emitting unit 13 that has been reflected, is two-dimensionally arranged. The control unit 11 performs control to read a detection signal from a light receiving element in a position corresponding to the scanning position of the light emitting unit 13 among the plurality of light receiving elements and measure a distance. As a result, it is possible to receive light efficiently.

Furthermore, according to the embodiment of the present disclosure, the distance measuring device (ToF sensor 1) according to the present embodiment includes the light emitting unit 13, the light receiving unit 14, and the control unit 11. The light receiving unit 14 detects incidence of light (laser light L1). The control unit 11 performs control to measure distance on the basis of a time from when the light emitting unit 13 emits light to when the light receiving unit 14 detects incidence of light. The control unit 11 generates a histogram of calculated values based on detection signals output from the light receiving unit 14, and detects, from among a plurality of peaks included in the generated histogram, a peak at which each of a calculated value and a peak width is equal to or greater than a predetermined threshold. As a result, it is possible to measure distance with high accuracy even in an environment where ambient light is strong.

While the embodiments of the present disclosure have been described above, the technical scope of the present disclosure is not limited to the above-described embodiments as it is, and various modifications can be made without departing from the gist of the present disclosure. Furthermore, components of different embodiments and modifications may be appropriately combined.

Furthermore, the effect described in the embodiments in the present specification is merely an example and is not restrictive. Hence, other effects can be obtained.

Note that the present technology can also be configured in the following manner.

(1) A distance measuring device including:

a light emitting unit;
a light receiving unit in which a plurality of light receiving elements that receives reflected light is two-dimensionally arranged, the reflected light being light of the light emitting unit that has been reflected; and
a control unit that performs control to read a detection signal from each of a predetermined number of the light receiving elements among the plurality of light receiving elements and measure a distance, in which
the control unit
detects abnormality of the light emitting unit, on the basis of a calculated value calculated on the basis of the detection signals of the predetermined number of the light receiving elements.

(2) The distance measuring device according to (1) above, in which

the control unit
generates a histogram of the calculated values, and detects abnormality of the light emitting unit on the basis of the histogram.

(3) The distance measuring device according to (2) above, in which

the control unit
detects abnormality of the light emitting unit in a case where a plurality of peaks included in the histogram includes a peak at which the calculated value and a peak width satisfy a predetermined condition.

(4) The distance measuring device according to (3) above, in which

the control unit
detects abnormality of the light emitting unit in a case where a peak at which the calculated value is equal to or greater than a predetermined threshold and the peak width is equal to or greater than a predetermined threshold is included.

(5) The distance measuring device according to (4) above, in which
the threshold of the peak width includes a value corresponding to a pulse width of light of the light emitting unit.

(6) The distance measuring device according to any one of (1) to (5) above, in which

the calculated value
includes a pixel value obtained by aggregating the number of the detection signals output from the light receiving unit for each of a plurality of light receiving elements.

(7) The distance measuring device according to any one of (1) to (6) above, in which

the light receiving element
includes a SPAD pixel.

(8) The distance measuring device according to any one of (1) to (7) above, in which

the control unit
detects abnormality of the light emitting unit in a case where the calculated value of a specific row or column among the calculated values of the light receiving elements for each row or column is equal to or greater than a predetermined threshold.

(9) A distance measuring method executed by a distance measuring device including

a light emitting unit, and
a light receiving unit in which a plurality of light receiving elements that receives reflected light is two-dimensionally arranged, the reflected light being light of the light emitting unit that has been reflected, the method including
a control step of performing control to read a detection signal from each of a predetermined number of the light receiving elements among the plurality of light receiving elements and measure a distance, in which
the control step

includes detecting abnormality of the light emitting unit, on the basis of a calculated value calculated on the basis of the detection signals of the predetermined number of the light receiving elements.

(10) A distance measuring device including:

a light emitting unit that emits light for scanning a predetermined distance measurement range;
a light receiving unit in which a plurality of light receiving elements that receives reflected light is two-dimensionally arranged, the reflected light being light of the light emitting unit that has been reflected; and
a control unit that performs control to read a detection signal from the light receiving element in a position corresponding to a scanning position of the light emitting unit among the plurality of light receiving elements and measure a distance.

(11) The distance measuring device according to (10) above, in which

the control unit
gradually changes a scanning position of the light emitting unit, and changes a scanning position of the light receiving unit in units of predetermined angles.

(12) The distance measuring device according to (11) above, in which

the control unit
aligns a scanning start position of the light emitting unit and a scanning start position of the light receiving unit.

(13) The distance measuring device according to (11) or (12) above, in which

the control unit
makes a scanning start position of the light emitting unit different from a scanning start position of the light receiving unit.

(14) The distance measuring device according to any one of (11) to (13) above, in which

the control unit
divides a region corresponding to a scanning position of the light receiving unit into a plurality of regions, and sets a different scanning timing for each of the plurality of divided regions.

(15) The distance measuring device according to any one of (10) to (14) above, in which

the control unit
changes a scanning position of the light emitting unit in units of predetermined angles, and changes a scanning position of the light receiving unit in units of the predetermined angles.

(16) A distance measuring method executed by a distance measuring device including a light emitting unit that emits light for scanning a predetermined distance measurement range, and

a light receiving unit in which a plurality of light receiving elements that receives reflected light is two-dimensionally arranged, the reflected light being light of the light emitting unit that has been reflected, the method including
a control step of performing control to read a detection signal from the light receiving element in a position corresponding to a scanning position of the light emitting unit among the plurality of light receiving elements and measure a distance.

(17) A distance measuring device including:

a light emitting unit;
a light receiving unit that detects incidence of light; and
a control unit that performs control to measure a distance on the basis of a time from when the light emitting unit emits light to when the light receiving unit detects incidence of light, in which
the control unit
generates a histogram of calculated values based on detection signals output from the light receiving unit, and detects, from among a plurality of peaks included in the generated histogram, a peak at which each of the calculated value and a peak width is equal to or greater than a predetermined threshold.

(18) The distance measuring device according to (17) above, in which

the peak width
includes a peak width of the threshold at the calculated value.

(19) The distance measuring device according to (17) or (18) above, in which

the peak width
includes a peak width at a half value between the calculated value of the peak value and the threshold at the calculated value.

(20) The distance measuring device according to any one of (17) to (19) above, in which

the control unit

detects, as a peak of ambient light, a peak at which the calculated value is less than a predetermined threshold or a peak width is less than a predetermined threshold among a plurality of peaks included in the histogram.

(21) The distance measuring device according to any one of (17) to (20) above, in which

the control unit

extracts, as a target of reflected light, a peak that satisfies a predetermined condition from among a plurality of peaks at which the calculated value is equal to or greater than a predetermined threshold among a plurality of peaks included in the histogram.

(22) The distance measuring device according to (21) above, in which

the control unit

extracts a predetermined number of peaks in descending order of the calculated value from among a plurality of peaks at which the calculated value is equal to or greater than a predetermined threshold.

(23) The distance measuring device according to (21) or (22) above, in which

the control unit

extracts a predetermined number of peaks in ascending order of flight time from among a plurality of peaks at which the calculated value is equal to or greater than a predetermined threshold.

(24) The distance measuring device according to any one of (19) to (23) above, in which

the control unit

detects, as reflected light, a peak having a shape similar to a peak at which a flight time is within a predetermined time among a plurality of peaks included in the histogram.

(25) A distance measuring method executed by a distance measuring device including a light emitting unit, and

a light receiving unit that detects incidence of light, the method including
a control step of performing control to measure a distance on the basis of a time from when the light emitting unit emits light to when the light receiving unit detects incidence of light, in which the control step

includes generating a histogram of calculated values based on detection signals output from the light receiving unit, and detecting, from among a plurality of peaks included in the generated histogram, a peak at which each of the calculated value and a peak width is equal to or greater than a predetermined threshold.

REFERENCE SIGNS LIST

| 1 | ToF sensor (distance measuring device) |
|---|---|
| 11 | Control unit |
| 13 | Light emitting unit |
| 14 | Light receiving unit |
| 15 | Calculation unit |
| 20 | SPAD pixel |
| 30 | Macropixel |
| 80 | Host |
| 90 | Object |

## Claims

1.  A distance measuring device comprising:

    a light emitting unit;
    a light receiving unit in which a plurality of light receiving elements that receives reflected light is two-dimensionally arranged, the reflected light being light of the light emitting unit that has been reflected; and
    a control unit that performs control to read a detection signal from each of a predetermined number of the light receiving elements among the plurality of light receiving elements and measure a distance, wherein
    the control unit
    detects abnormality of the light emitting unit, on a basis of a calculated value calculated on a basis of the detection signals of the predetermined number of the light receiving elements.

2.  The distance measuring device according to claim 1, wherein

    the control unit
    generates a histogram of the calculated values, and detects abnormality of the light emitting unit on a basis of the histogram.

3.  The distance measuring device according to claim 2, wherein

    the control unit
    detects abnormality of the light emitting unit in a case where a plurality of peaks included in the histogram includes a peak at which the calculated value and a peak width satisfy a predetermined condition.

4. The distance measuring device according to claim 3, wherein

the control unit
detects abnormality of the light emitting unit in a case where a peak at which the calculated value is equal to or greater than a predetermined threshold and the peak width is equal to or greater than a predetermined threshold is included.

5. The distance measuring device according to claim 4, wherein
the threshold of the peak width includes a value corresponding to a pulse width of light of the light emitting unit.

6. The distance measuring device according to claim 1, wherein

the calculated value
includes a pixel value obtained by aggregating the number of the detection signals output from the light receiving unit for each of a plurality of light receiving elements.

7. The distance measuring device according to claim 1, wherein

the light receiving element
includes a SPAD pixel.

8. The distance measuring device according to claim 1, wherein

the control unit
detects abnormality of the light emitting unit in a case where the calculated value of a specific row or column among the calculated values of the light receiving elements for each row or column is equal to or greater than a predetermined threshold.

9. A distance measuring method executed by a distance measuring device including

a light emitting unit, and
a light receiving unit in which a plurality of light receiving elements that receives reflected light is two-dimensionally arranged, the reflected light being light of the light emitting unit that has been reflected, the method comprising
a control step of performing control to read a detection signal from each of a predetermined number of the light receiving elements among the plurality of light receiving elements and measure a distance, wherein
the control step
includes detecting abnormality of the light emitting unit, on a basis of a calculated value calculated on a basis of the detection signals of the predetermined number of the light receiving elements.

## FIG. 1

# FIG. 2

# FIG. 3

DRIVE CIRCUIT 144

14

143

LD

TIMING CONTROL CIRCUIT

20

SPAD ARRAY

141

145

OUTPUT CIRCUIT

LS

# FIG. 4

## FIG. 5

## FIG. 6

## FIG. 7

LIGHT EMITTING UNIT
LIGHT RECEIVING UNIT

ANGLE (DEGREE)

t1 t2 t3 t4 t5 t6

TIME (SECOND)

## FIG. 8

LIGHT EMITTING UNIT
LIGHT RECEIVING UNIT

ANGLE (DEGREE)

t1 t2 t3 t4 t5 t6

TIME (SECOND)

# FIG. 10A

SCANNING DIRECTION

L1

142a-4 — — 142b-4

142a-20 — — 142b-20

142a-3 — — 142b-3

142a-2 — — 142b-2

142a-10 — — 142b-10

142a-1 — — 142b-1

142a  142b

# FIG. 10B

—— LIGHT EMITTING UNIT

········· LIGHT RECEIVING UNIT (FIRST REGION)

— — LIGHT RECEIVING UNIT (SECOND REGION)

ANGLE (DEGREE)

t1  t3
t2

TIME (SECOND)

## *FIG. 11*

CUMULATIVE PIXEL VALUE

P1

TIME

## *FIG. 12*

CUMULATIVE PIXEL VALUE

P2

W

TIME

## FIG. 13

## FIG. 14

# FIG. 15

# FIG. 16

# FIG. 17

```
        ┌──────────────┐
        │    START     │
        └──────┬───────┘
               ↓
    ┌────────────────────────┐
    │       EMIT LIGHT       │ ～S101
    └───────────┬────────────┘
                ↓
    ┌────────────────────────┐
    │     RECEIVE LIGHT      │ ～S102
    └───────────┬────────────┘
                ↓
    ┌────────────────────────┐
    │   GENERATE HISTOGRAM   │ ～S103
    └───────────┬────────────┘
                ↓
    ┌────────────────────────┐
    │    MEASURE DISTANCE    │ ～S104
    └───────────┬────────────┘
                ↓
    ┌────────────────────────┐
    │        OUTPUT          │ ～S105
    └───────────┬────────────┘
                ↓
        ┌──────────────┐
        │     END      │
        └──────────────┘
```

# FIG. 18

```
                    ┌─────────────────┐
                    │      START      │
                    └─────────────────┘
                             │
                             ▼
                      ╱‾‾‾‾‾‾‾‾‾╲  S201
              No     ╱  IS THERE PEAK  ╲
      ┌──────────── ╱ AT WHICH CUMULATIVE PIXEL ╲
      │            ╱ VALUE IS EQUAL TO OR GREATER THAN ╲
      │            ╲     PREDETERMINED    ╱
      │             ╲     THRESHOLD?    ╱
      │              ╲‾‾‾‾‾‾‾‾‾‾╱
      │                   │ Yes
      │                   ▼
      │             ╱‾‾‾‾‾‾‾‾‾╲  S202
      │            ╱  IS THERE PEAK  ╲          No
      │           ╱ AT WHICH PEAK WIDTH IS ╲ ──────────┐
      │           ╲ EQUAL TO OR GREATER THAN ╱          │
      │            ╲   PREDETERMINED   ╱                │
      │             ╲   THRESHOLD?   ╱                  │
      │              ╲‾‾‾‾‾‾‾‾╱                         │
      │                 │ Yes                          │
      │                 ▼         S203                 ▼          S204
      │      ┌───────────────────────────┐   ┌───────────────────────────┐
      │      │ LIGHT EMITTING UNIT IS ABNORMAL │   │ LIGHT EMITTING UNIT IS NORMAL │
      │      └───────────────────────────┘   └───────────────────────────┘
      │                 │                              │           S205
      │                 │                              ▼
      │                 │                    ┌───────────────────────────┐
      │                 │                    │   DETECT REFLECTED LIGHT   │
      │                 │                    └───────────────────────────┘
      │                 │                              │
      └─────────────────┼──────────────────────────────┘
                        ▼
                  ┌─────────────┐
                  │     END     │
                  └─────────────┘
```

# FIG. 19

START

S301
IS THERE PEAK AT WHICH CUMULATIVE PIXEL VALUE IS EQUAL TO OR GREATER THAN PREDETERMINED THRESHOLD?

No

Yes

S302
EXTRACT PREDETERMINED NUMBER OF PEAKS IN PREDETERMINED ORDER

S303
IS PEAK VALID?

No

Yes

S304
IS PEAK WIDTH EQUAL TO OR GREATER THAN THRESHOLD?

Yes

No

S305
IS THERE REMAINING PEAK?

Yes

No

S306
DETECT REFLECTED LIGHT

END

# FIG. 20

EXTERNAL ENVIRONMENT

| SERVER | VEHICLE | TERMINAL | BASE | ~ 7750 |

7000

7600

| 7620 GENERAL-PURPOSE COMMUNICATION I/F | 7630 DEDICATED COMMUNICATION I/F | 7640 POSITIONING PART | 7660 IN-VEHICLE DEVICE I/F |

7760 IN-VEHICLE DEVICE

7800 INPUT PART

7610 MICROCOMPUTER

7670 AUDIO IMAGE OUTPUT PART

7710 AUDIO SPEAKER

INTEGRATED CONTROL UNIT

| 7690 STORAGE | 7680 ONBOARD NETWORK I/F | 7650 BEACON RECEIVER |

7720 DISPLAY

7730 INSTRUMENT PANEL

7010 COMMUNICATION NETWORK

| 7100 DRIVE SYSTEM CONTROL UNIT | 7200 BODY SYSTEM CONTROL UNIT | 7300 BATTERY CONTROL UNIT | 7400 OUTSIDE INFORMATION DETECTION UNIT | 7500 INSIDE INFORMATION DETECTION UNIT |

| 7110 VEHICLE STATE DETECTOR | 7310 SECONDARY BATTERY | 7410 IMAGING PART | 7420 OUTSIDE INFORMATION DETECTOR | 7510 DRIVER STATE DETECTOR |

EP 4 105 597 A1

# FIG. 21

## INTERNATIONAL SEARCH REPORT

| International application No. |
| --- |
| PCT/JP2021/003779 |

**A. CLASSIFICATION OF SUBJECT MATTER**
Int.Cl. G01C3/06(2006.01)i, G01S7/497(2006.01)i
FI: G01S7/497, G01C3/06120Q

According to International Patent Classification (IPC) or to both national classification and IPC

**B. FIELDS SEARCHED**

Minimum documentation searched (classification system followed by classification symbols)
Int.Cl. G01B11/00-11/30, G01C3/00-3/32, G01S7/00-7/51, 13/00-13/95, 17/00-17/95

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2019-144186 A (DENSO CORPORATION) 29 August 2019 (2019-08-29), paragraphs [0012]-[0059], [0078], fig. 1-10 | 1-2, 6-9<br>3-5 |
| A | JP 2019-090679 A (OMRON AUTOMOTIVE ELECTRONICS CO., LTD.) 13 June 2019 (2019-06-13), entire text, all drawings | 1-9 |
| A | US 2016/0282453 A1 (GOOGLE INC.) 29 September 2016 (2016-09-29), entire text, all drawings | 1-9 |
| A | EP 2273288 A1 (ANYWIRE CORPORATION) 12 January 2011 (2011-01-12), entire text, all drawings | 1-9 |
| P, X<br>P, A | JP 2020-153751 A (DENSO CORPORATION) 24 September 2020 (2020-09-24), paragraphs [0013]-[0016], [0033]-[0038], fig. 1-3, 8 | 1-2, 6-7, 9<br>3-5, 8 |

☒ Further documents are listed in the continuation of Box C.     ☒ See patent family annex.

| | | | |
| --- | --- | --- | --- |
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 24 March 2021 | 06 April 2021 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

## INTERNATIONAL SEARCH REPORT

| International application No. |
|---|
| PCT/JP2021/003779 |

C (Continuation).   DOCUMENTS CONSIDERED TO BE RELEVANT

| Category* | Citation of document, with indication, where appropriate, of the relevant passages | Relevant to claim No. |
|---|---|---|
| P, X<br>P, A | JP 2020-106396 A (SONY SEMICONDUCTOR SOLUTIONS CORP.) 09 July 2020 (2020-07-09), paragraphs [0010], [0015], [0034], [0035], fig. 1, 2, 17 | 1-2, 6-7, 9<br>3-5, 8 |

Form PCT/ISA/210 (second sheet) (January 2015)

| INTERNATIONAL SEARCH REPORT<br>Information on patent family members | International application No.<br>PCT/JP2021/003779 |
|---|---|

| JP 2019-144186 A | 29 August 2019 | US 2019/0265356 A1<br>paragraphs [0046]-[0247],<br>[0288], fig. 1-10<br>CN 110187359 A |
| JP 2019-090679 A | 13 June 2019 | (Family: none) |
| US 2016/0282453 A1 | 29 September 2016 | WO 2016/160373 A1<br>entire text, all drawings<br>EP 3274737 A1<br>CN 107407727 A |
| EP 2273288 A1 | 12 January 2011 | (Family: none) |
| JP 2020-153751 A | 24 September 2020 | WO 2020/189062 A1<br>paragraphs [0013]-[0016],<br>[0033]-[0038],<br>fig. 1-3, 8 |
| JP 2020-106396 A | 09 July 2020 | WO 2020/137754 A1<br>paragraphs [0011], [0016],<br>[0039], [0040], fig. 1, 2, 18 |

Form PCT/ISA/210 (patent family annex) (January 2015)

**EP 4 105 597 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017224594 A